(19) Europäisches Patentamt
European Patent Office
Office européen des brevets

(11) **EP 3 749 851 B1**

(12) **EUROPÄISCHE PATENTSCHRIFT**

(45) Veröffentlichungstag und Bekanntmachung des Hinweises auf die Patenterteilung:
**04.01.2023   Patentblatt 2023/01**

(21) Anmeldenummer: **19704775.6**

(22) Anmeldetag: **08.02.2019**

(51) Internationale Patentklassifikation (IPC):
**F03D 7/02** (2006.01)

(52) Gemeinsame Patentklassifikation (CPC):
**F03D 7/0276; F03D 7/0296;** F05B 2270/1016; F05B 2270/327; F05B 2270/335; Y02E 10/72

(86) Internationale Anmeldenummer:
**PCT/EP2019/053097**

(87) Internationale Veröffentlichungsnummer:
**WO 2019/154969 (15.08.2019 Gazette 2019/33)**

(54) **VERFAHREN ZUM STEUERN EINER WINDENERGIEANLAGE UND ENTSPRECHENDE WINDENERGIEANLAGE**

METHOD FOR CONTROLLING A WIND ENERGY INSTALLATION AND CORRESPONDING WIND ENERGY INSTALLATION

PROCÉDÉ POUR COMMANDER UN AÉROGÉNÉRATEUR ET AÉROGÉNÉRATEUR CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2018   DE 102018102863**

(43) Veröffentlichungstag der Anmeldung:
**16.12.2020   Patentblatt 2020/51**

(73) Patentinhaber: **Wobben Properties GmbH
26607 Aurich (DE)**

(72) Erfinder: **ENGELKEN, Sönke
28215 Bremen (DE)**

(74) Vertreter: **Eisenführ Speiser
Patentanwälte Rechtsanwälte PartGmbB
Postfach 10 60 78
28060 Bremen (DE)**

(56) Entgegenhaltungen:
**EP-A1- 3 179 097     US-A1- 2014 327 243**

**Beschreibung**

Die vorliegende Erfindung betrifft ein Verfahren zum Steuern einer Windenergieanlage und die vorliegende Erfindung betrifft auch eine Windenergieanlage.

Windenergieanlagen sind bekannt und sie sind heutzutage aus einem Turm mit darauf angeordneter Gondel mit einem großen aerodynamischen Rotor aufgebaut. Durch den drehenden Rotor kann die Windenergieanlage, was insbesondere den Turm betrifft, in Schwingung versetzt werden. Problematisch kann das werden, wenn damit eine Resonanzfrequenz angeregt wird.

Um dem Problem zu begegnen, ist es bekannt, eine Windenergieanlage so zu steuern, dass sie einen solchen Drehzahlbereich möglichst auslässt. Bei drehzahlvariablen Windenergieanlagen, wovon auch die Erfindung ausgeht, erhöht sich die Drehzahl im Teillastbetrieb mit zunehmender Windgeschwindigkeit. Um dabei eine kritische, resonanzanregende Drehzahl auszulassen, kann die Windenergieanlage so gesteuert werden, dass der entsprechende kritische Drehzahlbereich möglichst schnell durchfahren wird. Ein solches Konzept kann aber in dem Bereich zu einem ungünstigen Wirkungsgrad führen. Ein schnelles Durchfahren eines solchen kritischen Drehzahlbereichs bei ansteigendem Wind, also ansteigender Drehzahl, bedeutet nämlich, dass in dem Bereich zunächst nur die Drehzahl erhöht wird, ohne die Leistung zu erhöhen, um dadurch nämlich schnell diesen Drehzahlbereich zu durchsteuern. Entsprechend kann das Resultat eine Leistungseinbuße sein.

Besonders problematisch kann in dieser Hinsicht sein, wenn der vorherrschende Wind etwa in dem Bereich ist, bei dem die kritische Drehzahl auftreten würde. Dann besteht die Gefahr, dass die Windenergieanlage häufig zwischen einem Drehzahlbereich unter und einem Drehzahlbereich über der kritischen Drehzahl hin und her steuert.

Das Deutsche Patent- und Markenamt hat in der Prioritätsanmeldung zu vorliegender Anmeldung folgenden Stand der Technik recherchiert: DE 100 16 912 C1, US 2009/0292397 A1, US 2014/0327243 A1, US 4,700,081 A, WO 2012/139584 A1 und WO 2017/036481 A1. Weiterer Stand der Technik ist in EP 3179097 A1 offenbart.

Der Erfindung liegt somit die Aufgabe zugrunde, zumindest eines der vorstehend genannten Probleme zu adressieren. Insbesondere soll eine Lösung geschaffen werden, bei der ein Betrieb der Windenergieanlage in einem Resonanzpunkt vermieden wird bei gleichzeitig möglichst hohem Wirkungsgrad. Zumindest soll zu bisher bekannten Lösungen eine Alternative vorgeschlagen werden.

Erfindungsgemäß wird ein Verfahren gemäß Anspruch 1 vorgeschlagen. Demnach wird ein Verfahren zum Steuern einer Windenergieanlage vorgeschlagen und dem liegt eine Windenergieanlage mit einem aerodynamischen Rotor mit in ihrem Blattwinkel verstellbaren Rotorblättern zugrunde. Die Windenergieanlage ist dabei drehzahlvariabel. Durch das Verstellen der Rotorblätter in ihrem Blattwinkel kann die Entnahme von Leistung aus dem Wind beeinflusst werden.

Das Verfahren betrifft den Teillastbereich, der auch als Teillastbetrieb bezeichnet werden kann, in dem die Windenergieanlage noch keine Nenndrehzahl oder Nennleistung erreicht, weil auch der Wind noch keine Nennwindgeschwindigkeit erreicht. Die Rotordrehzahl liegt somit in diesem Bereich unterhalb einer Nenndrehzahl und die Abgabeleistung der Windenergieanlage unterhalb einer Nennleistung. Die Abgabeleistung ist hierbei diejenige Leistung, die der Generator der Windenergieanlage abgibt.

Zum Steuern der Windenergieanlage in diesem Teillastbereich wird grundsätzlich eine Drehzahl-Leistungskennlinie verwendet. Diese gibt einen Zusammenhang zwischen einer sich in Abhängigkeit des vorherrschenden Windes einstellenden Rotordrehzahl und einer sich dazu einstellenden Abgabeleistung vor. Insbesondere wird die Windenergieanlage dabei so gesteuert, dass jeder Rotordrehzahl unterhalb der Nenndrehzahl eine Abgabeleistung zugeordnet ist. Je nachdem, welche Rotordrehzahl gerade anliegt, wird dann eine entsprechende Abgabeleistung eingestellt. Entspricht diese Abgabeleistung genau der mechanischen Leistung, die in dem Moment dem Wind entnommen werden kann, stellt sich ein stabiler Betriebspunkt mit der Rotordrehzahl und der eingestellten Abgabeleistung ein. Andernfalls verändert sich die Drehzahl und die Abgabeleistung wird entsprechend nachgestellt, bis sich ein solcher stabiler Betriebspunkt einstellt. Dadurch folgt der Betriebspunkt auch Änderungen der Windgeschwindigkeit.

Ein wichtiger Teil des Betriebs der Windenergieanlage im Teillastbereich ist somit das ständige Einstellen der Abgabeleistung gemäß der Drehzahl-Leistungskennlinie. Dazu wird nun aber vorgeschlagen, dass die Drehzahl-Leistungskennlinie im Bereich einer zu vermeidenden Problemdrehzahl einen Hysterese-Bereich aufweist. In diesem Hysterese-Bereich liegt somit keine eindeutige Drehzahl-Leistungskennlinie mehr vor und der Betriebspunkt in dem Hysterese-Bereich hängt von wenigstens einer weiteren Bedingung ab, nämlich davon, wo der Betriebspunkt unmittelbar vorher war.

Die zu vermeidende Problemdrehzahl kann besonders eine die Resonanzfrequenz der Windenergieanlage anregende Rotordrehzahl sein. Es wird somit im Grunde vorgeschlagen, dass sich die Betriebskennlinie für den Bereich dieser Problemdrehzahl aufteilt. Dadurch kann dieser Problemdrehzahl bei ansteigender Drehzahl, also bei ansteigendem Wind, anders begegnet werden, als bei abfallender Drehzahl, also bei abfallendem Wind. Es ist nun möglich, die Problemdrehzahl auf unterschiedliche Art und Weise zu vermeiden, wobei dadurch jeweils ein Weg mit einem hohen Wirkungsgrad gewählt werden kann.

Es ist auch zu beachten, dass grundsätzlich statt der Verwendung der Abgabeleistung auch ein Drehmoment, nämlich eines, das zwischen Läufer und Stator des Generators wirkt, verwendet werden kann. Die Leistung P entspricht dem Produkt des Drehmoments M mit der Drehzahl n (P = M x n). Bei konstanter Drehzahl n, wovon spätestens im eingeschwungenen Zustand ausgegangen werden kann, unterscheiden sich das Drehmoment und die Leistung somit nur durch einen Faktor. Somit wird als eine grundsätzliche Alternative vorgeschlagen, statt der Drehzahl-Leistungskennlinie eine Drehzahl-Drehmomentkennlinie zu verwenden. Gemäß einer Ausführungsform wird vorgeschlagen, dass in dem Hysterese-Bereich das Einstellen der Abgabeleistung, bzw. des Drehmoments, über eine Drehzahlregelung erfolgt, indem die Rotordrehzahl durch Einstellen der Abgabeleistung auf einen vorbestimmten Drehzahlsollwert geregelt wird. Es wird somit vorgeschlagen, in dem Hysterese-Bereich die Drehzahl-Leistungskennline, die auch als Betriebskennlinie bezeichnet werden kann, anders umzusetzen, als außerhalb des Hysterese-Bereichs. Außerhalb des Hysterese-Bereichs wird nach einer festen Vorgabe, die nämlich durch die Drehzahl-Leistungskennlinie festgelegt ist, die Abgabeleistung in Abhängigkeit der Drehzahl eingestellt. Jeder Rotordrehzahl ist dabei eine Abgabeleistung zugeordnet.

Im Hysterese-Bereich wird aber besonders jeweils für einen Teilzweig der Hysterese eine Drehzahl als Drehzahlsollwert vorgegeben. Dadurch können auch in diesem Hysterese-Bereich senkrechte Zweige auftreten, also Kennlinienzweige, in denen einem Drehzahlwert mehrere Abgabeleistungen über diese Senkrechte zugeordnet sind. Hier erfolgt dann keine Einstellung der Abgabeleistung, sondern ein Regeln der Rotordrehzahl auf den jeweiligen Drehzahlsollwert. Das funktioniert besonders so, dass einer Drehzahlerhöhung über den aktuellen Drehzahlsollwert in dem Hysterese-Bereich durch eine Erhöhung der Abgabeleistung entgegengewirkt wird. Dadurch wird die Drehzahl auf dem in dem Moment vorgegeben Drehzahlsollwert gehalten, während die Abgabeleistung dazu in ihrer Höhe schwanken kann. Anschaulich gesprochen wird dadurch der Betriebspunkt auf einem senkrechten Zweig des Hysterese-Bereichs der Betriebskennlinie gehalten, wobei sich der Betriebspunkt auf diesem senkrechten Kennlinienzweig, je nach Windgeschwindigkeit, auf und ab bewegen kann.

Anders als in dem übrigen Bereich der Betriebskennlinie wird in diesem Hysterese-Bereich somit nicht in Kauf genommen, dass die Drehzahl sich abhängig der Windgeschwindigkeit auf einen neuen Wert einstellt, sondern hier wird dem durch das Einstellen der Abgabeleistung entgegen gewirkt.

Entsprechend erhöht sich auf einem solchen Hysterese-Zweig bei zunehmender Windgeschwindigkeit die Abgabeleistung, während die Drehzahl aufgrund der durchgeführten Regelung konstant bleibt, jedenfalls im Idealfall. Auch dieses Verfahren ist grundsätzlich identisch, zumindest gleichwirkend über das Einstellen des Drehmoments statt der Abgabeleistung durchführbar. Grundsätzlich kann ein Hysterese-Zweig auch synonym als Hysterese-Abschnitt bezeichnet werden, und umgekehrt.

Gemäß einer Ausführungsform wird vorgeschlagen, dass in dem Hysterese-Bereich der Blattwinkel in Abhängigkeit der Abgabeleistung eingestellt wird. Auch hier kann anstelle der Abgabeleistung das eingestellte Drehmoment verwendet werden. Dadurch kann erreicht werden, dass der Arbeitspunkt, der sich auf einem solchen Hysterese-Zweig einstellt, mit möglichst gut angepasstem Blattwinkel arbeitet. Dabei ist zu berücksichtigen, dass die Veränderung der Abgabeleistung bei konstanter Drehzahl auch bedeutet, dass trotz konstanter Drehzahl eine Variation der Windleistung vorliegt, denn die Abgabeleistung entspricht im stationär eingestellten Zustand im Wesentlichen der Leistung, die aus dem Wind entnommen wird. Das bedeutet auch wiederum, dass bei gleicher Drehzahl auf diesem Hysterese-Zweig die Windgeschwindigkeit variiert und es variiert zwangsläufig die Schnelllaufzahl. Dazu wird vorgeschlagen, den Blattwinkel an die veränderte Schnelllaufzahl anzupassen, um aerodynamisch möglichst optimal zu arbeiten. Dabei wurde auch erkannt, dass statt einer Messung der Windgeschwindigkeit, die regelmäßig Ungenauigkeiten unterworfen ist, die Verwendung der eingestellten Abgabeleistung, gleiches gilt für ein stattdessen eingestelltes Drehmoment, zweckmäßig ist.

Der Blattwinkel kann in dem Hysterese-Bereich auch in Abhängigkeit der Drehzahl eingestellt werden, um dadurch die aerodynamische Situation in dem Hysterese-Bereich zu verbessern. Dabei kann die Einstellung des Blattwinkels bevorzugt auch abhängig der Abgabeleistung und der Drehzahl erfolgen, oder in Abhängigkeit einer beobachteten aerodynamischen Leistung.

Gemäß einer Ausführungsform wird vorgeschlagen, dass der Hysterese-Bereich von einer vorbestimmten unteren Grenzdrehzahl, die unterhalb der Problemdrehzahl liegt, bis zu einer oberen Grenzdrehzahl reicht, die oberhalb der Problemdrehzahl liegt. Insbesondere wird hier vorgeschlagen, dass diese Grenzdrehzahlen so gelegt werden, wenn die Problemdrehzahl eine Resonanzdrehzahl ist. Dadurch kann diese Resonanzdrehzahl bzw. ganz allgemein die Problemdrehzahl, auf einfache Art und Weise ausgespart werden, zumindest im Wesentlichen ausgespart werden.

Vorzugsweise wird der Hysterese-Bereich in einige, insbesondere vier Hysterese-Abschnitte unterteilt, nämlich einen ersten bis vierten Hysterese-Abschnitt.

Der erste Hysterese-Abschnitt bezeichnet dabei einen, der für Rotordrehzahlen unterhalb der Problemdrehzahl bis zu einer oberen Grenzleistung ansteigt, alternativ bis zu einem oberen Grenzmoment ansteigt. Die Rotordrehzahl liegt somit für diesen ersten Hysterese-Abschnitt unterhalb der Problemdrehzahl und insbesondere weist sie hier einen festen Wert auf, der auch als untere Grenzdrehzahl bezeichnet werden kann. Der Hysterese-Abschnitt ist somit insbesondere ein im Wesentlichen senkrechter Abschnitt vor der Problemdrehzahl.

Der zweite Hysterese-Abschnitt schließt sich an den ersten Hysterese-Abschnitt an und reicht bis zu einer Rotordrehzahl oberhalb der Problemdrehzahl. Da sich der zweite Hysterese-Abschnitt an den ersten anschließt, weist der zweite Hysterese-Abschnitt somit die obere Grenzleistung bzw. das obere Grenzmoment auf. Er beginnt bei einer Rotordrehzahl unterhalb der Problemdrehzahl. Von hier aus verläuft dieser zweite Hysterese-Abschnitt zu einer Rotordrehzahl oberhalb der Problemdrehzahl. Insbesondere bildet dieser zweite Hysterese-Abschnitt einen im Wesentlichen waagerechten Abschnitt, nämlich mit im Wesentlichen konstanter Abgabeleistung.

Dazu ist zu erwähnen, dass ein solcher waagerechter Hysterese-Abschnitt nicht dazu vorgesehen ist, dass sich auf ihm stationäre Betriebspunkte befinden. Vielmehr sollte sich idealerweise der Betriebszustand vom Ende des ersten Hysterese-Abschnitts sprunghaft, zumindest möglichst schnell zum Ende des zweiten Hysterese-Abschnitts verändern. Eine sprunghafte Veränderung ist natürlich unphysikalisch, denn dazu müsste die Drehzahl auf einen höheren Wert springen. Der waagerechte Hysterese-Abschnitt ist aber dazu vorgesehen, dass diese Änderung von geringeren zur höheren Rotordrehzahl schnell erfolgt. Da sich dieser zweite Hysterese-Abschnitt an den ersten anschließt, bedeutet das besonders, dass dieser zweite Hysterese-Abschnitt dann beschritten, nämlich möglichst schnell durchschritten wird, wenn mehr Leistung verfügbar ist, als die obere Grenzleistung bzw. ein größeres Drehmoment vorhanden ist, als das obere Grenzmoment.

Mit dieser überschüssigen Leistung bzw. diesem überschüssigen Drehmoment kann der Rotor der Windenergieanlage dann schnell auf den höheren Drehzahlbereich am Ende des zweiten Hysterese-Abschnitts beschleunigt werden. Dadurch wird die Problemdrehzahl schnell durchschritten, wobei aber durch den vorgeschalteten ersten Hysterese-Abschnitt zunächst die Windenergieanlage in einen Betriebspunkt hoher Leistungsabgabe gebracht wurde, statt sie auf niedriger Leistung zu halten und bei solch niedriger Leistung ohne Hysterese-Bereich die Problemdrehzahl zu Durchsteuern. Daher kann durch diesen Hysterese-Bereich ein hoher Wirkungsgrad erreicht werden, trotz dieses Durchsteuerns des Bereichs der Problemdrehzahl.

Der dritte Hysterese-Abschnitt bezeichnet einen bis zu einer unteren Grenzleistung oder einem unteren Grenzmoment abfallenden Zweig für Rotordrehzahlen oberhalb der Problemdrehzahl. Dieser dritte Hysterese-Abschnitt wird somit besonders dann beschritten, wenn die Abgabeleistung bereits vergleichsweise hoch war und auch die Rotordrehzahl bereits hoch war, nun aber, besonders wegen abfallenden Windes, die Leistung und Drehzahl gemäß der Betriebskennlinie wieder geringer werden. Drehzahl und Leistung fallen also ab und dieser dritte Hysterese-Abschnitt erreicht dann, dass die Drehzahl in einem gewissen Abstand oberhalb der Problemdrehzahl gehalten wird und dort zunächst nur die Abgabeleistung abfällt, gleiches gilt für das Drehmoment als Alternative. Auch hier wird dann besonders vorgeschlagen, dass über das Einstellen der Abgabeleistung bzw. des Drehmoments die Drehzahl auf einen Sollwert oberhalb der Problemdrehzahl ausgeregelt wird. Eine solche Regelung führt dazu, dass bei abfallendem Wind diese Drehzahl zunächst diesen vorgegebenen Wert des dritten Hysterese-Abschnitts behält, während die Abgabeleistung weiter abfällt. Sobald die Abgabeleistung die untere Grenzleistung erreicht bzw. das Drehmoment das untere Grenzmoment, kann dann diese immer noch vergleichsweise hohe Rotordrehzahl nicht mehr gehalten werden und es schließt sich somit der vierte Hysterese-Abschnitt an.

Auf dem vierten Hysterese-Abschnitt fällt dann die Rotordrehzahl unterhalb der Problemdrehzahl ab. Dabei kann die Abgabeleistung zunächst gleich bleiben. Somit ist, anschaulich gesprochen, der dritte Hysterese-Abschnitt im Wesentlichen, zumindest bevorzugt, senkrecht und der vierte Hysterese-Abschnitt, der sich daran anschließt, im Wesentlichen bzw. bevorzugt waagerecht. Auch für den vierten Hysterese-Abschnitt ist, wie für den zweiten Hysterese-Abschnitt, nicht vorgesehen, dass dieser stationäre Betriebspunkte bezeichnet, sondern dass sich der Betriebspunkt möglichst schnell entlang dieses vierten Hysterese-Abschnitts verändert.

Hier kann übrigens besonders beim Verändern des Betriebspunktes entlang des vierten Hysterese-Abschnitts ein Teil der Rotationsenergie zum Abbremsen des Rotors abgegeben werden.

Zusammenfassend wird somit vorzugsweise für den ersten und dritten Hysterese-Abschnitt jeweils eine Drehzahlregelung mit Hilfe der Abgabeleistung oder alternativ des Drehmoments vorgeschlagen. Durch diese Regelung stellen sich entsprechende Betriebspunkte auf diesen Abschnitten ein, die je nach vorherrschender Windgeschwindigkeit auch dauerhaft eingenommen werden können.

Die beiden vorzugsweise waagerechten Abschnitte, nämlich der zweite und vierte Hysterese-Abschnitt, sind dafür vorgesehen, dass der jeweilige Betriebspunkt möglichst schnell von einer geringen Rotordrehzahl unterhalb der Problemdrehzahl auf eine hohe Drehzahl oberhalb der Problemdrehzahl wechselt, bzw. umgekehrt. Herrscht eine Windgeschwindigkeit vor, zu der eigentlich ein Betriebspunkt mit einer Drehzahl im Bereich der Problemdrehzahl gehört, stellt sich bei der vorgeschlagenen Betriebskennline mit Hysterese-Bereich dennoch ein im Wesentlichen stabiler Betriebspunkt ein, nämlich auf dem ersten Hysterese-Abschnitt, wenn die Drehzahl zuvor auch schon unterhalb der Problemdrehzahl lag, oder auf dem dritten Hysterese-Abschnitt, wenn die Drehzahl vorher auch schon oberhalb der Problemdrehzahl lag.

Für die Drehzahlregelung und auch für andere Regelungsaspekte, wie eine später noch beschriebe Umschaltung zwischen Hysterese-Abschnitten, kann eine Leistung oder alternativ ein Drehmoment verwendet werden. Hier kommen grundsätzlich die folgenden vier Größen in Betracht, die grundsätzlich gleichwirkend und unter Berücksichtigung ihrer Zusammenhänge austauschbar sein können:

1. Die Abgabeleistung, die die Leistung bezeichnet, die der Generator erzeugt bzw. abgibt, alternativ kann das auch die Leistung bezeichnen, die die Windenergieanlage abgibt, ist somit eine elektrische Größe und kann auch als elektrische Leistung $P_{el}$ bezeichnet werden. Die Abgabeleistung kann meist, zumindest indirekt, gemessen werden.

2. Das mechanische Drehmoment $T_{mech}$, das das Moment bezeichnet, das auf den Rotor wirkt. Es kann durch einen nachfolgend noch beschriebenen Zustandsbeobachter erfasst werden.

3. Die mechanische Leistung $P_{mech}$, die die Leistung bezeichnet, die der Rotor umsetzt. Sie lässt sich aus dem mechanischen Drehmoment $T_{mech}$ und der Drehzahl n berechnen, nach der Formel: $P_{mech}=T_{mech}*n$.

4. Das elektrische Drehmoment $T_{el}$, das ein Drehmoment bezeichnet, das im Generator vorhanden ist, insbesondere zwischen Stator und Läufer, also elektrodynamischem Rotor des Generators. Es kann aus der elektrischen Leistung $P_{el}$ und der Drehzahl n berechnet werden nach der Formel: $T_{el}=P_{el}/n$.

Sofern das nicht anders dargestellt ist, kommt immer dann, wenn wenigstens eine dieser vier Größen beschrieben ist, jede andere der übrigen Möglichkeiten in Betracht. Lediglich das mechanische Drehmoment und die mechanische Leistung werden bevorzugt als durch einen Zustandsbeobachter beobachtete Größen verwendet. Die beiden elektrischen Größen, nämlich das elektrische Moment und die elektrische Abgabeleistung, können in der Regel mit ausreichender Genauigkeit und ausreichender Geschwindigkeit ohne Zustandsbeobachter erfasst werden.

Auch für die Drehzahl-Leistungskennlinie gelten diese Erläuterungen zur Bedeutung der Leistung und das kann sinngemäß auch auf eine Drehzahl-Drehmomentkennlinie übertragen werden, die alternativ zur Drehzahl-Leistungskennlinie verwendet werden könnte. Das gilt für jegliche Ausführungsformen. Als jeweils einzustellendes Drehmoment wird grundsätzlich ein elektrisches Generatormoment vorgeschlagen, insbesondere für jegliche Ausführungsformen, die vorschlagen, ein Drehmoment einzustellen. Insoweit ein Drehmoment, besonders ein oberes oder unteres Grenzmoment, als Eingangsgröße berücksichtigt wird, kann dieses auch das elektrische Generatormoment betreffen, vorzugsweise wird dafür aber vorgeschlagen, das mechanische Drehmoment des Rotors des Generators zu betrachten. Grundsätzlich unterscheiden sich das elektrische Generatormoment und das mechanische Drehmoment des Rotors des Generators in ihrem dynamischen Verhalten, sind im stationären Zustand aber als gleich oder annähernd gleich anzusehen.

Es ist auch zu beachten, dass jegliche Ausführungsformen, die eine Drehzahl-Leistungskennlinie betrachten, besonders solche, die die Windenergieanlage basierend auf der Drehzahl-Leistungskennlinie steuern, dennoch ein Drehmoment als Eingangsgröße berücksichtigen können. Insbesondere vorgeschlagene Umschaltungen zwischen Hysterese-Bereichen in Abhängigkeit eines Grenzmomentes können auch bei jeglichen Ausführungsformen Berücksichtigung finden, die eine Steuerung basierend auf einer Drehzahl-Leistungskurve durchführen. Umgekehrt gilt sinngemäß das gleiche für Steuerungen, die basierend auf einer Drehzahl-Drehmomentkennlinie durchgeführt werden. Auch diese können Leistungswerte als Eingangsgrößen berücksichtigen.

Gemäß einer Ausführungsform wird vorgeschlagen, dass der erste Hysterese-Abschnitt von der unteren Grenzdrehzahl, wenn also besonders eine ansteigende Rotordrehzahl die untere Grenzdrehzahl erreicht, bis zu der oberen Grenzleistung bzw. bis zum oberen Grenzmoment ansteigt, insbesondere bei im Wesentlichen gleichbleibender Rotordrehzahl. Diese gleichbleibende Rotordrehzahl wird dabei vorzugsweise als Drehzahlsollwert vorgegeben. In diesem ersten Hysterese-Abschnitt wird dann besonders die Rotordrehzahl ausgeregelt und entsprechend ergibt sich im Wesentlichen ein senkrechter Abschnitt für den ersten Hysterese-Abschnitt.

Außerdem, zumindest alternativ, wird vorgeschlagen, dass der zweite Hysterese-Abschnitt bis zu einer oberen Grenzdrehzahl verläuft, insbesondere bei im Wesentlichen gleichbleibender Leistung bzw. gleichbleibendem Drehmoment. Der zweite Hysterese-Abschnitt verläuft somit im Wesentlichen waagerecht von der unteren zur oberen Grenzdrehzahl. Ein stabiler Betriebspunkt stellt sich dort nicht ein. Vielmehr ist dieser zweite Hysterese-Abschnitt nur dazu vorgesehen, dass sich die Drehzahl möglichst schnell von der unteren Grenzdrehzahl zur oberen Grenzdrehzahl verändert. Die Problemdrehzahl wird dadurch schnell durchschritten.

Außerdem, zumindest alternativ, ist für den dritten Hysterese-Abschnitt vorgesehen, dass er von der oberen Grenzdrehzahl, wenn also besonders eine abfallende Rotordrehzahl die untere Grenzdrehzahl erreicht, bis zur unteren Grenzleistung bzw. bis zum unteren Grenzmoment abfällt, insbesondere bei im Wesentlichen gleichbleibender Rotordrehzahl. Hierbei liegt also der Fall zugrunde, dass die Rotordrehzahl von oberhalb der Grenzdrehzahl kommt und auf einem Kennlinienabschnitt ohne Hysterese bis zur oberen Grenzdrehzahl abfällt. Dann wird besonders diese obere Grenzdrehzahl als Drehzahlsollwert vorgegeben und dieser wird ausgeregelt. Bei weiter abfallendem Wind bedeutet das, dass die Abgabeleistung bzw. das Drehmoment, verringert wird, um die Rotordrehzahl auf dieser oberen Grenzdrehzahl als Sollwert zu halten. Dieser dritte Hysterese-Abschnitt verläuft somit im Wesentlichen senkrecht, nämlich bei der oberen Grenzdrehzahl.

Außerdem oder zumindest alternativ verläuft der vierte Hysterese-Abschnitt bis zu der unteren Grenzdrehzahl, also von der oberen Grenzdrehzahl zur unteren Grenzdrehzahl. Dazu wird insbesondere vorgeschlagen, dass die Abgabeleistung bzw. das Drehmoment gleich bleibt und entsprechend dieser vierte Hysterese-Abschnitt waagerecht verläuft.

Für den Fall, dass im ersten Hysterese-Abschnitt die Windgeschwindigkeit wieder abfällt und sich der Betriebspunkt dabei wieder an den Anfang des ersten Hysterese-Abschnitts bewegt, wird vorgeschlagen, dass dann auch die im ersten Hysterese-Abschnitt vorgesehene Drehzahlregelung wieder beendet wird und bei weiter abfallendem Wind der Betriebspunkt dann auf einem Teil der Betriebskennlinie geführt wird, der nicht mehr Teil des Hysterese-Bereichs ist.

Ganz ähnlich verhält es sich auch bei dem dritten Hysterese-Abschnitt, der bei ansteigender Windgeschwindigkeit auch wieder zu einem Kennlinienabschnitt verlassen werden kann, bei dem die Rotordrehzahl oberhalb der oberen Grenzdrehzahl liegt. Auch hier wird dann vorgeschlagen, dass die Drehzahlregelung beendet wird.

Dabei ist auch zu beachten, dass üblicherweise bei ansteigendem Wind, wenn sich der Betriebspunkt auf dem ersten Hysterese-Abschnitt befindet und dessen Ende erreicht, also die obere Grenzleistung erreicht, zunächst die Drehzahlregelung bestehen bleibt, wobei der Drehzahlsollwert sprunghaft von der unteren Grenzdrehzahl zur oberen Grenzdrehzahl verändert wird. Wenn nicht ausgerechnet in diesem Moment die Windgeschwindigkeit wieder abnimmt, wird aber unmittelbar im Anschluss daran auch die Drehzahlregelung beendet, wenn nämlich die Abgabeleistung bzw. das Drehmoment weiter ansteigt. Damit wird auch der Hysterese-Bereich verlassen. Der Betriebspunkt befindet sich dann auf der Betriebskennlinie oberhalb des Hysterese-Bereichs, also für Drehzahlen oberhalb der oberen Grenzdrehzahl und für Abgabeleistungen oberhalb der oberen Grenzleistung.

Ganz ähnlich verhält es sich, wenn sich bei abfallendem Wind der Betriebspunkt auf dem dritten Hysterese-Abschnitt bewegt und durch die Drehzahlregelung die Drehzahl auf einem Wert in Höhe der oberen Grenzdrehzahl gehalten wird, während die Abgabeleistung auf einen Wert in Höhe der unteren Grenzleistung abfällt. Dann wird hier die Drehzahlregelung beibehalten, aber der Drehzahlsollwert ändert sich dann sprunghaft von der oberen Grenzdrehzahl zur unteren Grenzdrehzahl. Dadurch wandert der Betriebspunkt entlang des vierten Hysterese-Abschnitts zur unteren Grenzdrehzahl. Auch hier wird sich bei weiter abfallendem Wind die Abgabeleistung weiter verringern, was zum Beenden der Drehzahlregelung führt. Damit wird dann auch der Hysterese-Bereich nach unten verlassen und der Betriebspunkt weiter auf der Betriebskennlinie in einem Bereich unterhalb des Hysterese-Bereichs geführt.

Erfindungsgemäß wird vorgeschlagen, dass die Windenergieanlage so betrieben wird, dass bei zunehmendem Wind bis zu einer bzw. der unteren Grenzdrehzahl eine Abgabeleistung gemäß der Drehzahl-Leistungskennlinie eingestellt wird. Ab der unteren Grenzdrehzahl wird dann bei weiter zunehmendem Wind die Rotordrehzahl im Wesentlichen konstant gehalten und die Abgabeleistung erhöht. Das erfolgt besonders durch die genannte Drehzahlregelung. So arbeitet die Steuerung dann, bis die Abgabeleistung die obere Grenzleistung erreicht hat bzw. das obere Grenzmoment erreicht wird. Ist diese obere Grenzleistung bzw. das obere Grenzmoment erreicht, wird die Rotordrehzahl bis zu der oberen Grenzdrehzahl erhöht. Erfindungsgemäß wird vorgeschlagen das erst nach Abwarten einer vorgegebenen Umschaltverzögerung durchzuführen. Innerhalb dieser Umschaltverzögerung kann geprüft werden, ob tatsächlich das Drehmoment bzw. die Abgabeleistung weiterhin so hoch bleibt, andern falls, sollte das Drehmoment bzw. die Abgabeleistung wieder abfallen, kann das Erhöhen der Drehzahl unterbleiben. Wenn die Drehzahl aber erhöht wird, erfolgt das insbesondere so, dass der Drehzahlsollwert von der unteren Grenzdrehzahl auf die obere Grenzdrehzahl springt. Die Regelung führt dann die Rotordrehzahl gemäß diesem Sollwertsprung entsprechend nach. Je nach Regeleinstellung erhöht sich dabei die Rotordrehzahl entsprechend schnell.

Davon ausgehend befindet sich dann der Betriebspunkt im Wesentlichen oberhalb des Hysterese-Bereichs. Nimmt nun der Wind wieder ab, fallen die Rotordrehzahl und die Abgabeleistung auch ab, bis die Rotordrehzahl die obere Grenzdrehzahl im Grunde von oben erreicht hat. Der Betriebspunkt wird entlang dieses oberen Kennlinienzweigs von oben an den oberen Punkt des Hysterese-Bereichs herangeführt. Dazu wird überwacht, ob, also von oben kommend, die obere Grenzdrehzahl erreicht wird. Sobald das der Fall ist, und der Wind weiter abnimmt, wird die Rotordrehzahl im Wesentlichen konstant gehalten, nämlich über eine Drehzahlregelung, die diesen oberen Grenzdrehzahlwert als Drehzahlsollwert hat. Die Abgabeleistung ist somit hier wieder die Stellgröße und die wird sich zum Erreichen dieses Regelungsziels bei weiter abnehmendem Wind verringern, bis sie die untere Grenzleistung erreicht hat. Gleiches gilt natürlich auch für das Erreichen des unteren Grenzmoments, falls das Drehmoment zur Regelung verwendet wird. Ist also diese untere Grenzleistung oder das untere Grenzmoment erreicht, wird die Rotordrehzahl bis zu der unteren Grenzdrehzahl verringert, insbesondere möglichst schnell verringert.

Erfindungsgemäß wird vorgeschlagen das erst nach Abwarten einer vorgegebenen Umschaltverzögerung durchzuführen. Innerhalb dieser Umschaltverzögerung kann geprüft werden, ob tatsächlich das Drehmoment bzw. die Abgabeleistung weiterhin so niedrig bleibt, andern falls, sollte das Drehmoment bzw. die Abgabeleistung wieder ansteigen, kann das Verringern der Drehzahl unterbleiben. Als Umschaltverzögerung kann hier dieselbe wie für den Übergang vom ersten zum zweiten Hysterese-Abschnitt verwendet werden, oder eine eigene, nämlich eine weitere vorgegebene Umschaltverzögerung. Auch das Verringern der Drehzahl erfolgt dann wieder durch die Drehzahlregelung, bei der der Drehzahlsollwert von der oberen Grenzdrehzahl auf die untere Grenzdrehzahl verändert wird.

Gemäß einer Ausführungsform wird vorgeschlagen, dass die Windenergieanlage so betrieben wird, dass bei Erreichen der oberen Grenzleistung bzw. des oberen Grenzmomentes, nämlich durch ansteigende Windgeschwindigkeit, nach Abwarten der vorgegebenen Umschaltverzögerung, die Rotordrehzahl bis zu der oberen Grenzdrehzahl erhöht und die Abgabeleistung reduziert wird. Dieses Reduzieren der Abgabeleistung hat zur Folge, dass zusätzliche Energie in Rotationsenergie des Rotors umgewandelt werden kann, was zu einem besonders schnellen Anstieg der Rotordrehzahl führt, zumal wenn gleichzeitig auch die Windgeschwindigkeit ansteigt. Dadurch kann die Problemdrehzahl möglichst schnell durchsteuert werden.

Außerdem oder alternativ wird vorgeschlagen, dass bei dem Erreichen der unteren Grenzleistung bzw. des unteren Grenzmomentes, nämlich durch abfallende Windgeschwindigkeit, nach Abwarten der vorgegebenen oder einer weiteren vorgegebenen Umschaltverzögerung, die Rotordrehzahl bis zu der unteren Grenzdrehzahl verringert wird und die Abgabeleistung erhöht wird, um die Problemdrehzahl zu durchsteuern. Hierdurch kann auch bei abfallender Windgeschwindigkeit die Problemdrehzahl schnell durchsteuert werden, weil nämlich durch den Anstieg der Abgabeleistung Leistung bzw. Energie aus dem Rotor genommen und dieser dadurch abgebremst wird.

Gemäß einer Ausführungsform wird vorgeschlagen, dass zum Betreiben der Windenergieanlage im Hysterese-Bereich der Drehzahl-Leistungskennlinie ein auf den Rotor wirkendes mechanisches Drehmoment aufgenommen wird. Insbesondere wird vorgeschlagen, dass ein Zustandsbeobachter zum Aufnehmen des mechanischen Drehmoments verwendet wird, insbesondere um das Erreichen des oberen und/oder unteren Grenzdrehmoments zu erfassen. Insbesondere wird hier vorgeschlagen, dass ein mechanisches Drehmoment beim Betreiben der Windenergieanlage im ersten und/oder dritten Hysterese-Abschnitt des Hysterese-Bereichs beobachtet wird. In dem ersten und dritten Hysterese-Abschnitt führt das Erreichen eines oberen bzw. unteren Grenzdrehmoments zunächst zu einem Umschalten des Drehzahlsollwerts. Um dies möglichst gezielt auszulösen, wird hier vorgeschlagen, das mechanische Drehmoment zu beobachten, also systemtechnisch zu beobachten. An dieser Stelle kann die Verwendung des mechanischen Drehmoments, insbesondere die Verwendung des beobachteten mechanischen Drehmoments eine Verbesserung, insbesondere Stabilisierung der Regelung im Hysterese-Bereich schaffen. Besonders am Ende des ersten Hysterese-Bereichs entscheidet das anliegende Drehmoment darüber, ob die Drehzahl tatsächlich mit dem vorherrschenden Wind auf die obere Grenzdrehzahl erhöht werden kann. Durch die Verwendung der vorgeschlagenen Beobachtung des mechanischen Drehmoments kann dazu ein stabiler Wert ermittelt werden. Der Übergang vom ersten zum zweiten Hysterese-Abschnitt und damit das Erhöhen der Rotordrehzahl von der unteren zur oberen Grenzdrehzahl kann dadurch sicher gestartet werden.

Ähnliches gilt für den unteren Bereich des dritten Hysterese-Abschnitts, von dem aus über den vierten Hysterese-Abschnitt die Drehzahl schnell verringert werden soll.

Der Zustandsbeobachter kann aber gleichzeitig, besonders basierend auf dem beobachteten Drehmoment, eine mechanische Leistung ermitteln. Besonders kann hier eine vom Generator abgegebene Leistung ermittelt werden. Und diese steht in besonders engem Zusammenhang zu der in dem Moment aus dem Wind entnommenen Leistung, welche durch Berücksichtigung einer Beschleunigungs- oder Abbremsleistung aus der Abgabeleistung bestimmt werden kann. Dadurch kann durch Verwendung eines solches Beobachters die vorgeschlagene Regelung, besonders im Hysterese-Bereich zuverlässig umgesetzt werden.

Gemäß einer Ausführungsform wird ein Verfahren vorgeschlagen, das dadurch gekennzeichnet ist, dass zum Umschalten vom ersten zum zweiten Hysterese-Abschnitt ein von einer Leistung oder einem Drehmoment abhängiges erstes Umschaltkriterium zu Grunde gelegt wird. Vorzugsweise wird auch hier eine elektrische oder mechanische Leistung, insbesondere eine beobachtete mechanische Leistung oder ein elektrisches oder mechanisches Drehmoment, insbesondere ein beobachtetes mechanisches Drehmoment verwendet. Die mechanische Leistung kann auch als Ersatz für eine Abgabeleistung verwendet werden. Im Wesentlichen kann die mechanische Leistung der Abgabeleistung entsprechen, aber besonders sagt die mechanische Leistung, gleiches gilt für das mechanische Moment, mehr über den Zustand des Rotors aus.

Vorzugsweise ist das erste Umschaltkriterium so ausgestaltet, dass zum Umschalten vom ersten zum zweiten Hysterese-Abschnitt eine vorgegebene Umschaltverzögerung abgewartet wird und das Umschalten dann erfolgt, wenn während der gesamten Umschaltverzögerung eine obere Grenzleistung bzw. ein oberes Grenzmoment erreicht oder überschritten ist. Es wird somit nicht sofort beim Erreichen des betreffenden Grenzwertes umgeschaltet, sondern es wird zunächst geprüft, ob sich der hohe Wert auch hält. Hält er sich nicht, geht die Prüfung von vorne los, sobald der Grenzwert erneut überschritten wird. Hält sich der Wert aber lange genug auf dem hohen Niveau, nämlich für die Dauer der Umschaltverzögerung, so wird dann das Umschalten eingeleitet.

Diese Umschaltverzögerung und auch grundsätzlich alle anderen beschriebenen Umschaltverzögerungen liegen bevorzugt im Bereich von wenigen Sekunden bis Minuten, vorzugsweise in einem Bereich von 5 Sekunden bis zu 5 Minuten, insbesondere im Bereich von 10 Sekunden bis zu 2 Minuten.

Außerdem oder alternativ wird gemäß einer Ausführungsform vorgeschlagen, dass zum Umschalten vom dritten zum vierten Hysterese-Abschnitt ein von einer Leistung oder einem Drehmoment abhängiges zweites Umschaltkriterium zu Grunde gelegt wird, und insbesondere wird vorgeschlagen, dass das zweite Umschaltkriterium so ausgestaltet ist, dass zum Umschalten vom dritten zum vierten Hysterese-Abschnitt eine bzw. die vorgegebene oder weitere vorgegebene Umschaltverzögerung abgewartet wird und das Umschalten dann erfolgt, wenn während der gesamten Umschaltverzögerung bzw. weiteren Umschaltverzögerung eine untere Grenzleistung bzw. ein unteres Grenzmoment erreicht oder unterschritten ist. Das Umschalten vom dritten zum vierten Hysterese-Abschnitt wird somit sinngemäß so vorgeschlagen, wie das Umschalten vom ersten zum zweiten Hysterese-Abschnitt, wobei dieselbe oder eine andere, nämlich die weitere Umschaltverzögerung verwendet werden kann. Die Größe der Umschaltverzögerung liegt aber vorzugsweise in beiden Varianten in dem genannten Bereich.

Das Verwenden eines Umschaltkriteriums, bei dem eine Umschaltverzögerung wie beschrieben verwendet wird, führt auch dazu, dass seltener der kritische Drehzahlbereich durchfahren wird.

Es können nun besonders auf Basis der aus dem Wind entnommenen Leistung, die über den Beobachter bestimmt wird, gleiches gilt für das Drehmoment, auch Kriterien verwendet werden, nach denen eine Umschaltung vom ersten auf den zweiten Hysterese-Abschnitt erfolgt. Gemäß einer Ausführungsform kann somit eine Umschaltung vom ersten auf den zweiten Hysterese-Abschnitt erst dann erfolgen, wenn für eine Umschaltzeit, die als Zeit $t_{min}$ bezeichnet werden kann, eine Leistung oder ein Drehmoment oberhalb der Grenzleistung bzw. des Grenzdrehmoments aus dem Wind entnommen wird bzw. durch den Wind hervorgerufen wird. Gleiches kann für die Umschaltung vom dritten auf den vierten Hysterese-Abschnitt erfolgen. Eine Umschaltung vom dritten auf den vierten Hysterese-Abschnitt wird dann erst eingeleitet, wenn für die Umschaltzeit, oder eine andere Umschaltzeit, also insbesondere für die Zeit $t_{min}$ eine Leistung oder ein Drehmoment unterhalb der Grenzleistung bzw. des Grenzdrehmoments aus dem Wind entnommen wird, bzw. von dem Wind hervorgerufen wird.

Vorzugsweise wird vorgeschlagen, dass der zur Ermittlung des mechanischen Drehmoments und ggf. der verfügbaren Leistung verwendeter Zustandsbeobachter die Drehzahl des Generators und das mechanische Drehmoment des Generators als zu beobachtende Zustandsgrößen aufweist.

Durch die Verwendung der Drehzahl des Generators und des mechanischen Drehmoments des Generators als zu beobachtende Zustandsgrößen kann besonders der momentane Zustand des Generators gut beurteilt werden. Auch das ist besonders vorteilhaft für eine gute und zuverlässige Steuerung der Windenergieanlage in dem Hysterese-Bereich.

Vorzugsweise wird ein Verfahren vorgeschlagen, dass dadurch gekennzeichnet ist, dass der zur Ermittlung des mechanischen Drehmoments verwendete Zustandsbeobachter definiert ist durch die folgende Struktur:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

in der

- J das gemeinsame Trägheitsmoment des Rotors und Generators bezeichnet,
- $\omega$ die Drehzahl des Generators ist,
- $k_\omega$ und $k_T$ Parameter zur Beeinflussung der Dynamik des Beobachters sind,
- $T_{el}$ als elektrisches Drehmoment bezeichnet wird und sich als Quotient vom Generator abgegebener Leistung P und der Drehzahl $\omega$ berechnet und
- $T_{mech}$, das mechanische Drehmoment des Rotors bezeichnet, wobei

die beobachteten Größen mit einem ^-Zeichen und Ableitungen nach der Zeit mit einem ˙-Zeichen gekennzeichnet sind, wobei vorzugsweise eine verfügbare Leistung als Produkt aus beobachteter Drehzahl $\hat{\omega}$ und beobachtetem mechanischen Drehmoment $\hat{T}_{mech}$ berechnet wird, wobei diese verfügbare Leistung als Abgabeleistung und damit als Kriterium verwendet werden kann, um zu Prüfen, ob sie die obere oder untere Grenzleistung erreicht bzw. über- oder unterschreitet. Die abgegebene Leistung kann einer in einen elektrischen Zwischenspeicher eingespeisten Leistung entsprechen, insbesondere einer in einen Gleichstromzwischenkreis eines Wechselrichters eingespeisten Leistung. Sie kann aber auch einer ins Versorgungsnetz eingespeisten Leistung entsprechen, insbesondere einer durch einen Wechselrichter in ein Versorgungsnetz eingespeisten Leistung.

Durch diese Beobachterstruktur ist auf vergleichsweise einfache Art und Weise, nämlich durch die Verwendung eines Modells zweiter Ordnung, eine effiziente und gleichzeitig zuverlässige Beobachtung der Windenergieanlage und besonders ihres Generators möglich.

Gemäß einer Ausgestaltung wird vorgeschlagen, dass das Verfahren dadurch gekennzeichnet ist, dass im ersten Hysterese-Abschnitt für die Rotordrehzahl als Drehzahlsollwert die untere Grenzdrehzahl vorgegeben wird und die Rotordrehzahl auf die untere Grenzdrehzahl als Drehzahlsollwert durch Verstellen der Abgabeleistung geregelt wird,

- bei Erreichen der oberen Grenzleistung bzw. des oberen Grenzdrehmomentes im ersten Hysterese-Abschnitt in den zweiten Hysterese-Abschnitt gewechselt wird und für die Rotordrehzahl als Drehzahlsollwert die obere Grenzdrehzahl vorgegeben wird, so dass dann die Rotordrehzahl auf die obere Grenzdrehzahl als Drehzahlsollwert durch Verstellen der Abgabeleistung geregelt wird, wobei insbesondere beim Erreichen des zweiten Hysterese-Abschnitts vom ersten Hysterese-Abschnitt aus der Drehzahlsollwert sprungartig von der unteren Grenzdrehzahl auf die obere Grenzdrehzahl erhöht wird,

- im dritten Hysterese-Abschnitt für die Rotordrehzahl als Drehzahlsollwert die obere Grenzdrehzahl vorgegeben wird, und die Rotordrehzahl auf die obere Grenzdrehzahl als Drehzahlsollwert durch Verstellen der Abgabeleistung geregelt wird und/oder
- bei Erreichen der unteren Grenzleistung bzw. des unteren Grenzdrehmomentes im dritten Hysterese-Abschnitt in den vierten Hysterese-Abschnitt gewechselt wird und für die Rotordrehzahl als Drehzahlsollwert die untere Grenzdrehzahl vorgegeben wird und die Rotordrehzahl auf die untere Grenzdrehzahl als Drehzahlsollwert durch Verstellen der Abgabeleistung geregelt wird, wobei insbesondere beim Erreichen des vierten Hysterese-Abschnitts vom dritten Hysterese-Abschnitt aus der Drehzahlsollwert sprungartig von der oberen Grenzdrehzahl auf die untere Grenzdrehzahl verringert wird.

Damit wird besonders erreicht, dass durch die jeweilige Drehzahlregelung der Betriebspunkt bei gleichzeitiger Ausnutzung eines hohen Wirkungsgrads mit einem gewissen Abstand zur Problemdrehzahl geführt werden kann. Dadurch wird außerdem eine Situation vorbereitet, die das schnelle Umschalten des Drehzahlsollwertes ermöglicht, so dass schnell von einer Drehzahl unterhalb der Problemdrehzahl auf eine Drehzahl oberhalb der Problemdrehzahl gewechselt werden kann bzw. umgekehrt.

Vorzugsweise wird vorgeschlagen, dass die Drehzahlregelung des Hysterese-Bereichs beendet wird, wenn die Rotordrehzahl um einen vorbestimmten Schwellwert unter die untere Grenzdrehzahl abfällt, oder die Rotordrehzahl um einen weiteren oder denselben vorbestimmten Schwellwert über die obere Grenzdrehzahl ansteigt. Grundsätzlich sollte die Drehzahlregelung ausschließen, dass die Rotordrehzahl unter die untere Drehzahl abfällt, bzw. über die obere Drehzahl ansteigt. Passiert das aber doch in einem deutlichen Umfang, wenn bspw. eine große, spontane Flaute oder eine große Bö auftritt, kann das ein Kriterium sein, die Drehzahlregelung dennoch zu verlassen. Vorzugsweise wird vorgeschlagen, dass die Drehzahlregelung des Hysterese-Bereichs beendet wird, wenn die Abgabeleistung unter die untere Grenzleistung fällt bzw. über die obere Grenzleistung steigt. Ebenso kann auch das Drehmoment berücksichtigt werden, ob dieses das untere Grenzmoment unterschreitet oder das obere überschreitet. Dies betrifft besonders das Drehmoment des Rotors des Generators, das auch synonym als Generatormoment bezeichnet werden kann. Vorzugsweise wird hierzu das beobachtete mechanische Drehmoment betrachtet. Eine Umschaltung kann entweder sofort bei Unter-bzw. Überschreiten der unteren bzw. oberen Grenzleistung erfolgen, oder zeitlich verzögert, insbesondere nach einer Zeit $t_{min}$, während der auch eine Rückkehr in den Drehzahlregelbetrieb bei Über- bzw. Unterschreiten der unteren bzw. oberen Grenzleistung möglich ist.

Dadurch kann ein klar definiertes Umschalten zwischen Hysterese-Bereich und anderem Bereich der Betriebskennlinie erfolgen. Besonders ist hier hervorzuheben, und das wird gemäß einer Ausführungsform vorgeschlagen, dass ein Wechsel in den Hysterese-Bereich abhängig der Rotordrehzahl erfolgt, ein Zurückwechseln aus dem Hysterese-Bereich aber in Abhängigkeit der Abgabeleistung oder des Drehmomentes erfolgt.

Gemäß einer Ausführungsform wird vorgeschlagen, dass die untere und die obere Grenzdrehzahl in Abhängigkeit einer vorgegebenen gewünschten Häufigkeit eines Durchfahrens des Hysterese-Bereichs gewählt werden. Außerdem oder alternativ wird vorgeschlagen, dass die untere und die obere Grenzdrehzahl um eine vorgegebene Drehzahldifferenz unterhalb bzw. oberhalb der Problemdrehzahl liegen. Es wurde erkannt, dass je näher die untere und obere Grenzdrehzahl an der Problemdrehzahl liegen, der Hysterese-Bereich umso häufiger durchfahren wird, nämlich mit aufsteigendem Wind über den ersten und zweiten Hysterese-Abschnitt und mit wieder abfallendem Wind über den dritten und vierten Hysterese-Abschnitt. Umso größer der Abstand zwischen unterer und oberer Grenzdrehzahl einerseits und der Problemdrehzahl andererseits ist, umso länger würde ein Betriebspunkt im Hysterese-Bereich auf dem ersten oder dritten Hysterese-Abschnitt verbleiben.

Dabei wurde erkannt, dass einerseits die untere und obere Grenzdrehzahl möglichst nah an der Problemdrehzahl liegen sollten, um möglichst wenig von einer idealen Betriebskennlinie abzuweichen. Andererseits wurde auch erkannt, dass nicht nur das Vermeiden einer Resonanzanregung einen gewissen Abstand zur Problemdrehzahl erforderlich macht, sondern dass auch ein zu häufiges Durchlaufen des Hysterese-Bereichs vermieden werden kann. Vorzugsweise werden somit die untere und obere Grenzdrehzahl unter Berücksichtigung dieser Kriterien gewählt, also besonders unter Berücksichtigung wie weit die optimale Betriebskennlinie beibehalten wird, als auch die Häufigkeit des Durchfahrens des Hysterese-Bereichs.

Durch Vorgabe einer Drehzahldifferenz kann ein gleichmäßiger Abstand zur Problemdrehzahl vorgegeben werden. Die Problemdrehzahl liegt dann symmetrisch zwischen der unteren und oberen Grenzdrehzahl. Gemäß einer Ausführungsform wird ein ungleicher Abstand der unteren und der oberen Grenzdrehzahl von der Problemdrehzahl vorgeschlagen. Es wurde erkannt, dass hierdurch berücksichtigt werden kann, dass eine typische normale Betriebskennlinie einer Windenergieanlage für unterschiedliche Drehzahlen einen unterschiedlichen Leistungsgradienten der Betriebskennlinie aufweist. Bei höheren Drehzahlen ist der Leistungsgradient der Betriebskennlinie üblicherweise steiler.

Es wird damit vorzugsweise vorgeschlagen, dass ein geringerer Abstand der oberen Grenzdrehzahl von der Problemdrehzahl gewählt wird, als der Abstand zwischen unterer Grenzdrehzahl von der Problemdrehzahl.

Erfindungsgemäß wird auch eine Windenergieanlage gemäß Anspruch 15 vorgeschlagen.

Die Windenergieanlage ist dazu vorbereitet, ein Verfahren gemäß wenigstens einer vorstehend beschriebenen Ausführungsform auszuführen. Vorzugsweise sind die entsprechenden Verfahrensschritte oder Verfahrensmerkmale wenigstens einer vorstehend beschriebenen Ausführungsform dazu in der Steuereinrichtung implementiert. Auch für die Windenergieanlage wird als eine grundsätzliche Alternative vorgeschlagen, statt der Drehzahl-Leistungskennlinie eine Drehzahl-Drehmomentkennlinie zu verwenden.

Nachfolgend wird die Erfindung exemplarisch anhand von Ausführungsbeispielen unter Bezugnahme auf die begleitenden Figuren näher erläutert.

Figur 1    zeigt eine Windenergieanlage einer perspektivischen Darstellung.

Figur 2    zeigt eine vorgeschlagene Betriebskennlinie mit Hysterese-Bereich.

Figur 3    zeigt schematisch eine Regelungsstruktur zum Steuern der Windenergieanlage.

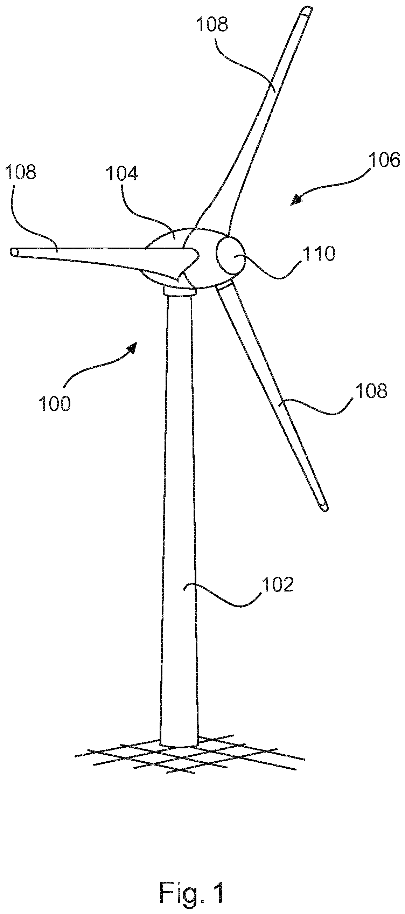

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

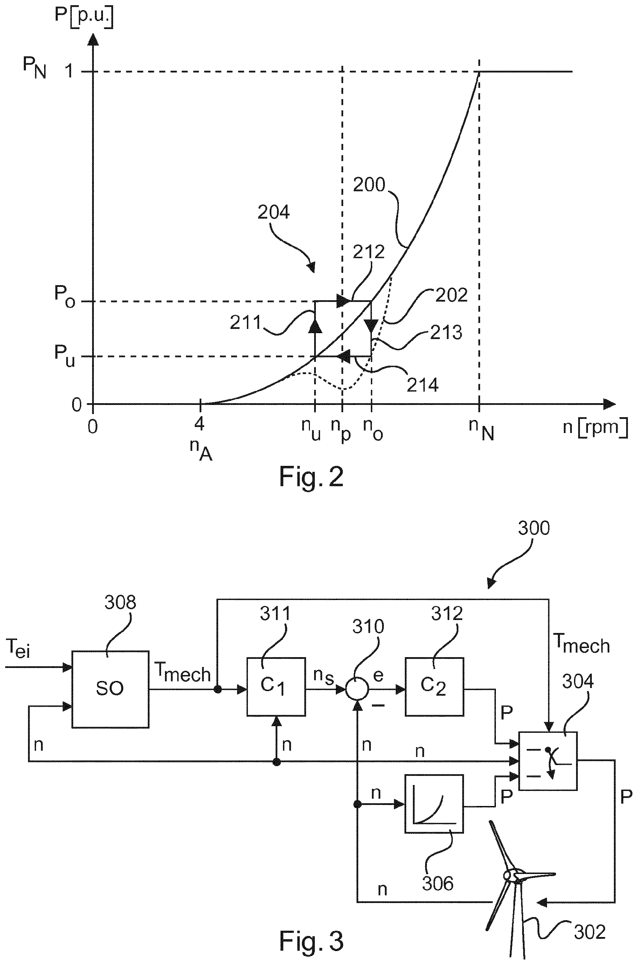

Figur 2 zeigt eine Betriebskennlinie 200 mit mehreren Abschnitten und Variationsmöglichkeiten. Die Betriebskennlinie 200 gibt grundsätzlich eine einzustellende Leistung P in Abhängigkeit einer erfassten Drehzahl n an und kann insoweit auch als Drehzahl-Leistungskennlinie bezeichnet werden. Diese Betriebskennlinie 200 zeigt den Teillastbetrieb bzw. Teillastbereich einer Windenergieanlage, der nämlich von der Drehzahl 0 bzw. von einer Einschaltdrehzahl $n_A$, die auch synonym als Startdrehzahl bezeichnet werden kann, bis zu einer Nenndrehzahl $n_N$ reicht. Der Bereich mit Drehzahlen größer als der Nenndrehzahl $n_N$ wird als Volllastbereich oder Volllastbetrieb bezeichnet und seine Betrachtung ist für die vorliegende Erfindung nicht von besonderer Relevanz.

Die Betriebskennlinie 200 reicht im Wesentlichen von der Einschaltdrehzahl $n_A$, die in dem Beispiel den Wert 4 U/min aufweist, in einer im Wesentlichen kontinuierlich und monoton steigenden Kurve bis zur Nenndrehzahl $n_N$, bei der sie etwa Nennleistung $P_N$ erreicht.

In dem Diagramm ist auch eine Problemdrehzahl $n_P$ eingezeichnet, die bspw. eine Resonanz der Windenergieanlage anregende Drehzahl sein kann. Somit kann sie auch als Resonanzdrehzahl bezeichnet werden. Es soll nun möglichst vermieden werden, die Windenergieanlage bei dieser Problemdrehzahl $n_P$ zu betreiben.

Eine Steuerung basierend auf der unmodifizierten Betriebskennlinie 200 würde in ihrem gesamten Bereich, und somit auch im Bereich der Problemdrehzahl np Betriebspunkte einstellen.

Um das zu vermeiden, schlägt der Stand der Technik einen Umgehungsabschnitt 202 vor, der in Figur 2 gepunktet dargestellt ist. Dieser, ggf. auch etwas überzeichnete Umgehungsabschnitt 202 verlässt die Betriebskennlinie 200 bei ansteigender Drehzahl in einem Bereich vor der Problemdrehzahl $n_P$, insbesondere vor einer unteren Grenzdrehzahl $n_u$. Dieser Umgehungsabschnitt wird dann dort sehr flach und weist sogar abschnittsweise eine negative Steigung auf. Das hat den Effekt, dass bei ansteigender Windgeschwindigkeit die Betriebskennlinie 200 zunächst verlassen wird, durch die negative Steigung des Umgehungsabschnitts 202 dann die Leistung, nämlich besonders die Abgabeleistung, verringert wird, obwohl die aus dem Wind entnommene bzw. entnehmbare Leistung aber zunimmt. Dieser somit nicht genutzte Leistungsteil führt dann zur Beschleunigung des Rotors der Windenergieanlage, so dass die Drehzahl schnell ansteigt. Erst, wenn die Problemdrehzahl $n_P$ überschritten wurde, insbesondere zum Bereich der oberen Grenzdrehzahl $n_o$ hin, steigt dann erst die Leistung an, was somit erst dann dem Ansteigen der Drehzahl entgegenwirkt.

Die Problemdrehzahl $n_P$ kann somit schnell durchsteuert werden. Es ist aber auch erkennbar, dass dieser Umgehungsabschnitt weniger Leistung erzeugt bzw. die Windenergieanlage hier so betrieben wird, dass diese weniger Leistung erzeugt.

Um diesen Umgehungsabschnitt 202 zu verbessern, wird der Hysterese-Bereich 204 vorgeschlagen. Der Hysterese-Bereich 204 weist vier Hysterese-Abschnitte auf, nämlich den ersten bis vierten Hysterese-Abschnitt 211 bis 214.

Steigt nun die Windgeschwindigkeit an und bewegt sich der Betriebspunkt der Windenergieanlage entlang der Betriebskennlinie 200, beginnend von der Startdrehzahl $n_A$, kann er die untere Grenzdrehzahl $n_u$ erreichen. Wird diese erreicht, wird von der klassischen Steuerung gemäß der Betriebskennlinie 200 auf eine Drehzahlregelung umgeschaltet. Nun wird die untere Grenzdrehzahl $n_u$ dieser Regelung als Drehzahlsollwert vorgegeben. Steigt die Windgeschwindigkeit nun weiter an, versucht die Regelung diesen Drehzahlsollwert, nämlich die untere Grenzdrehzahl $n_u$ zu halten, in dem die Abgabeleistung erhöht wird. Dadurch bewegt sich der Betriebspunkt dann auf dem ersten Hysterese-Abschnitt 211. Bei zunehmender Windgeschwindigkeit bewegt sich somit dieser Betriebspunkt auf dem ersten Hysterese-Abschnitt 211 nach oben, seine Leistung nimmt also zu. Erreicht nun der Betriebspunkt auf dem ersten Hysterese-Abschnitt 211 die obere Grenzleistung Po, wobei hier auch stattdessen ein oberes Grenzmoment verwendet werden kann, wird auf den zweiten Hysterese-Abschnitt 212 umgeschaltet. Dies kann auch zeitverzögert erfolgen, nachdem für eine Umschaltverzögerung, insbesondere eine Zeit $t_{min}$ eine Leistung oberhalb der oberen Grenzleistung abgegeben bzw. beobachtet wurde.

Das bedeutet, dass die Regelung zunächst unverändert bleibt, als Drehzahlsollwert allerdings den Wert der oberen Grenzdrehzahl $n_o$ erhält. Die Abgabeleistung wird somit zunächst nicht erhöht, ggf. aufgrund der Regelung sogar verringert, was in der Kennlinie der Figur 2 links nicht dargestellt ist. Dadurch kann die zusätzliche Leistung durch den ansteigenden Wind in eine Drehzahlerhöhung gewandelt werden und der Betriebspunkt erreicht dann schnell auf dem zweiten Hysterese-Abschnitt 212 die obere Grenzdrehzahl $n_o$. Dann wird im Grunde der Hysterese-Bereich 204 verlassen, denn es kann hier angenommen werden, dass die Windgeschwindigkeit zumindest geringfügig weiter steigt. Der Betriebspunkt wird dann auf der unveränderten Betriebskennlinie 200 weiter in Richtung zur Nenndrehzahl $n_N$ bzw. Nennleistung $P_N$ geführt, je nach Windgeschwindigkeit.

Nimmt die Windgeschwindigkeit von dort allerdings wieder ab, kann die Drehzahl auf die obere Grenzdrehzahl $n_o$ abfallen. Ist das der Fall, wird hier wieder von einem normalen Kennlinienbetrieb auf eine Drehzahlregelung umgeschaltet. Als Drehzahlsollwert wird die obere Grenzdrehzahl no verwendet. Es wird dann die Leistung reduziert, um ein weiteres Abfallen der Drehzahl zu vermeiden, um also diesen Drehzahlsollwert der oberen Grenzdrehzahl $n_o$ einzuhalten.

Bei weiter fallendem Wind erfolgt das solange, bis die Abgabeleistung die untere Grenzleistung erreicht. Das geschieht auf dem dritten Hysterese-Abschnitt 213. Wird aber diese untere Grenzleistung, von oben kommend, erreicht, so wird der Drehzahlsollwert von der oberen Grenzdrehzahl $n_o$ auf die untere Grenzdrehzahl $n_u$ umgeschaltet. Statt der unteren Grenzleistung kann als Auslöser auch ein unteres Grenzmoment verwendet werden. Die Umschaltung kann auch zeitverzögert nach einer Umschaltverzögerung, insbesondere einer Zeit $t_{min}$ erfolgen. Dafür kann das aktuelle mechanische Moment aus einem Zustandsbeobachter zum Beobachten des mechanischen Moments verwendet werden. Gleiches gilt auch bei dem Übergang von dem ersten zum zweiten Hysterese-Abschnitt, wenn das Erreichen des oberen Grenzmoments überwacht wird.

Jedenfalls wird dann am Ende des dritten Hysterese-Abschnitts durch die Umschaltung des Drehzahlsollwerts der vierte Hysterese-Abschnitt 214 beschritten. Dabei verringert sich die Drehzahl aber schnell von der oberen Grenzdrehzahl $n_o$ zur unteren Grenzdrehzahl $n_u$. Wird das Ende des vierten Hysterese-Abschnitts 214 erreicht, liegt dann also ein Betriebspunkt mit der unteren Grenzdrehzahl $n_u$ und der unteren Grenzleistung $P_u$ vor, wäre wieder der Ausgangspunkt des Hysterese-Bereichs 204 erreicht. Fällt nun die Windgeschwindigkeit weiter ab, wird der Hysterese-Bereich 204 verlassen und die Anlagensteuerung geht wieder auf eine übliche Kennlinien-Steuerung über.

Besonders ist zu beachten, zumindest gemäß einer Ausführungsform, dass der erste Hysterese-Abschnitt 211 durch Erreichen der unteren Grenzdrehzahl $n_u$ ausgelöst wird. Das Erreichen der unteren Grenzdrehzahl $n_u$, von noch geringeren Drehzahlen kommend, löst also diesen ersten Hysterese-Abschnitt 211 aus. Beendet wird dieser erste Hysterese-Abschnitt aber durch Erreichen der oberen Grenzleistung bzw. seines oberen Grenzmoments. Ebenso wird dann der zweite Hysterese-Abschnitt und damit der Hysterese-Bereich 204 überhaupt verlassen, wenn die Abgabeleistung bzw. das Drehmoment weiter ansteigt. Sinngemäß wird auch der dritte Hysterese-Abschnitt durch Erreichen einer Drehzahl ausgelöst und durch Erreichen eines Drehmoments bzw. einer Abgabeleistung verlassen.

Figur 3 gibt eine Regelungsstruktur schematisch an. Mit dieser Regelungsstruktur 300 soll die dort nur schematisch angedeutete Windenergieanlage 302, die der Windenergieanlage 100 der Figur 1 entsprechen kann, gesteuert werden. Ein für die vorliegende Erfindung wichtiger Block ist der Umschaltblock 304, der bezogen auf die Kennlinien-Darstellung der Figur 2 das Eintreten in den Hysterese-Bereich 204 bzw. ein Verlassen des Hysterese-Bereichs 204 steuert. Dabei ist zu beachten, dass dieser Umschaltblock 304 schematisch zu verstehen ist und statt der bildlichen Umschaltung in diesem Umschaltblock 304 auch anderweitige Realisierungen, insbesondere durch entsprechende Softwarelösungen, in Betracht kommen. Auch muss nicht unbedingt hart umgeschaltet werden, sondern in dem Umschaltblock 304, oder anderweitig, und auch ein Übergangsbereich realisiert werden.

Jedenfalls symbolisiert dieser Umschaltblock 304, dass in jedem Fall zur Steuerung der Windenergieanlage eine Leistung P vorgegeben wird. Diese Leistung P wird entsprechend zur Steuerung an die Windenergieanlage 302 als Leistungssollwert gegeben. Dort wird diese gewünschte Leistung P umgesetzt, was. u.a. mittels Einstellen eines Erregerstroms vorgenommen werden kann, wenn ein fremderregter Synchrongenerator verwendet wird. Aber auch auf andere Art und Weise kann eine Abgabeleistung des Generators gesteuert werden, wie bspw. durch das Steuern des Statorstroms, wenn der Generator ein Synchrongenerator ist. Diese Leistung kann auch anderweitig bei anderen Generatortypen umgesetzt werden und dem Fachmann ist grundsätzlich die Umsetzung einer solchen Leistung mittels eines Generators bekannt.

Die Reglerstruktur 300 zeigt nun die beiden Varianten, eine solche Leistung P vorzugeben. Die übliche Variante besteht darin, die Leistung in Abhängigkeit einer Drehzahl über eine Betriebskennlinie einzustellen. Dies erfolgt über den Kennlinienblock 306. Dieser arbeitet im Grunde so, wie anhand der Betriebskennlinie 200 in Figur 2 erläutert wurde, nämlich ohne den Hysterese-Bereich 204 bzw. außerhalb des Hysterese-Bereichs 204.

Befindet sich der aktuelle Betriebspunkt aber nicht außerhalb des Hysterese-Bereichs 204, wird entsprechend die im Zusammenhang mit Figur 2 erläuterte Hysterese geführte Regelung verwendet. Das Starten der Regelung im Hysterese-Bereich erfolgt dann, wenn die Drehzahl bei Drehzahlanstieg die untere Grenzdrehzahl $n_u$ erreicht, oder bei von oben kommendem Drehzahlabfall die obere Grenzdrehzahl $n_o$ erreicht. Deswegen erhält der Umschaltblock 304 die Drehzahl n als Eingangsgröße. Der Umschaltblock 304 kann also dann auf den Hysterese-Bereich schalten.

Soll der Hysterese-Bereich 204 wieder verlassen werden, wird das dadurch erkannt, dass bei ansteigendem Wind ein oberes Grenzmoment überschritten wird, nämlich besonders am Ende des zweiten Hysterese-Abschnitts 212, oder mit abfallendem Wind ein unteres Grenzmoment unterschritten wird, nämlich am Ende des vierten Hysterese-Abschnitts 214. Um dies zu erkennen, erhält der Umschaltblock 304 außerdem das hierfür relevante mechanische Drehmoment $T_{mech}$. Ein Drehmoment T kann alternativ als Drehmoment M bezeichnet werden.

Dieses mechanische Drehmoment $T_{mech}$ wird durch einen Zustandsbeobachter 308 geschätzt. Der Zustandsbeobachter 308 erhält dafür als Eingangsgrößen das elektrische Drehmoment $T_{el}$ und die Drehzahl n. Das elektrische Drehmoment $T_{el}$ ist regelmäßig aus den erfassten Strömen des verwendeten Generators bekannt. Als Drehzahl n kann die Drehzahl verwendet werden, die auch ansonsten für die Regelung verwendet wird. An Stelle der Drehzahl n kann auch die Kreisfrequenz $\omega$ verwendet werden. Diese beiden Größen unterscheiden sich nur in ihrer Darstellung bzw. in der gewählten Einheit bzw. unterscheiden sich daher nur durch einen konstanten Faktor.

Die Regelung im Hysterese-Bereich 204 erfolgt dann so, dass ein Drehzahlsollwert ns auf das Summierelement 310 gegeben wird, in dem die Ist-Drehzahl n von der Soll-Drehzahl ns abgezogen wird. Das Ergebnis dieses Soll-Ist-Vergleichs ist der Regelfehler e. Dieser Regelfehler wird auf den zweiten Reglerblock 312 gegeben, der daraus die Leistung P bestimmt, nämlich im regelungstechnischen Sinne als Stellgröße bestimmt. Die so bestimmte Leistung P wird dann an den Umschaltblock 304 gegeben. Hat der Umschaltblock 304 aufgrund der vorstehend erläuterten Kriterien umgeschaltet auf die Steuerung über den Hysterese-Bereich, so wird diese Leistung P, die der zweite Reglerblock 312 abgibt, letztlich an die Windenergieanlage 302 weitergeleitet.

Auch das ist schematisch zu verstehen, denn die Reglerstruktur 300 ist letztlich natürlich auch Teil der Windenergieanlage 302.

Der zweite Reglerblock 312 kann bspw. als P-Regler mit starker Verstärkung ausgebildet sein. Es kommen grundsätzlich auch andere Reglertypen in Betracht, wie bspw. ein P-I-Regler, aber bei der hier zu lösenden Aufgabe kann eine geringe Regelabweichung, die die Verwendung eines P-Reglers ergeben kann, in Kauf genommen werden. Wird im Falle eines einfachen P-Reglers in dem zweiten Reglerblock 312 nur eine ausreichende große Verstärkung, also ein ausreichend großer P-Anteil gewählt, so kann dennoch bei dem ersten und dritten Hysterese-Abschnitt 211 bzw. 213 jeweils von einem annähernd senkrechten Verlauf ausgegangen werden.

Die Solldrehzahl ns wird dabei durch den ersten Reglerblock 311 bestimmt. Dafür erhält der erste Reglerblock 311 als Eingangsgröße das beobachtete mechanische Drehmoment. Ist dieses so groß, dass es ein oberes Grenzmoment erreicht, wird als Solldrehzahl ns eine obere Grenzdrehzahl $n_o$ ausgegeben. Fällt das Drehmoment aber unter bzw. auf ein unteres Grenzmoment, wird als Solldrehzahl ns die untere Grenzdrehzahl $n_u$ ausgegeben.

Dieser erste Reglerblock 311 ist somit ein nichtlinearer Regler, der auch zuletzt eingestellte Werte berücksichtigt. Wenn das mechanische Drehmoment $T_{mech}$ in einem Bereich zwischen unterem oder oberem Grenzmoment liegt, kann die Solldrehzahl $n_S$ je nach weiteren Bedingungen die untere Grenzdrehzahl $n_u$ oder die obere Grenzdrehzahl $n_o$ sein. Dabei kommen verschiedene Arten der Umsetzung in Betracht. Eine ist, dass der erste Reglerblock 311 zunächst jeweils den zuletzt ausgegeben Wert für die Solldrehzahl ns wählt und nur bei Unter- bzw. Überschreiten des betreffenden Drehmomentgrenzwertes den Drehzahlsollwert ns ändert. Ergänzend oder alternativ kommt aber auch in Betracht, dass die aktuelle Drehzahl n berücksichtigt wird und entsprechend bei einer Drehzahl, die etwa der unteren Grenzdrehzahl $n_u$ entspricht, auch diese als Drehzahlsollwert ausgegeben wird, solange das Drehmoment noch nicht das obere Grenzmoment überschritten hat. Gleiches gilt für den Fall, dass die Drehzahl etwa der oberen Grenzdrehzahl $n_o$ entspricht. Dann wird nämlich auch diese als Sollwert ausgegeben, solange das Drehmoment noch nicht unter das untere Grenzmoment abgefallen ist. Um dies zu veranschaulichen, erhält der erste Reglerblock 311 die Drehzahl n als weitere Eingangsgröße.

Vorsorglich wird nochmals darauf hingewiesen, dass der Umschaltblock 304 nur symbolisch zu verstehen ist, denn die Auswahl zwischen Steuerung über die Betriebskennlinie unter Verwendung des Kennlinienblocks 306 einerseits und über die Drehzahlregelung über den ersten Reglerblock 311, das Summierelement 310 und den zweiten Reglerblock 312 andererseits kann natürlich auch weitere interne Anpassungen erforderlich machen. Wäre also bspw. in dem zweiten Reglerblock 312 ein PI-Regler implementiert, sollte natürlich bei Deaktivierung, also bei Regelung unter Verwendung des Kennlinienblock 306 vermieden werden, dass ständig ein Regelfehler e berechnet wird und dadurch der Integrator immer weiter aufintegriert. Das ist aber nur ein Beispiel und dem Fachmann ist bewusst, dass er je nach Auswahl der Steuerung, also je nach Auswahl, ob innerhalb oder außerhalb des Hysterese-Bereichs gesteuert wird, auch weitere interne Größen betroffen sein können.

Bei einigen Windenergieanlagen-Typen müssen bestimmte Drehzahlbereiche innerhalb des normalen Betriebsbereiches vermieden, bzw. schnell durchfahren werden. Dies wurde gemäß dem Stand der Technik mit modifizierten Drehzahl-Leistungs-Kennlinien gelöst, die im Bereich der Problemdrehzahl "Täler" aufwiesen, die Kennlinie somit waagerecht verläuft, oder sogar in Ihrer Leistung bei zunehmender Drehzahl abfällt, so dass die Windenergieanlage den Problembereich beschleunigt durchfuhr bzw. dort nicht dauerhaft betrieben wurde. Besonders auf Grund von Gradientenbeschränkungen bei der Drehzahl-Leistungs-Kennlinie ist dies aber mit Ertragsverlusten verknüpft.

Die vorgeschlagene Lösung sieht vor, besonders über einen Drehmoment-Beobachter das anliegende aerodynamische Drehmoment zu schätzen. Es kann dann eine Hysterese definiert werden, bei der die Windenergieanlage erst ab einem bestimmten Schwell-Drehmoment zu einer Drehzahl über der Problemdrehzahl beschleunigt und bei Betrieb oberhalb der Problemdrehzahl, beim Abfallen der Drehzahl erst ab einem kleineren Schwellmoment wieder unter die Problemdrehzahl abbremst. Die Breite des Hysterese-Bereichs, also der Abstand der unteren Grenzdrehzahl zur oberen Grenzdrehzahl, definiert dann in Abhängigkeit der Winddynamik die Häufigkeit der Durchfahrung des Problembereichs. Entsprechend kann die Breite vorgegeben werden.

Auf Basis des Drehmomentbeobachters ist ein geschlossener Drehzahlregelkreis im Teillastbereich möglich und wird gemäß einer Ausführungsform vorgeschlagen.

Wirkungsgradverluste können dadurch gegenüber der vorbekannten Lösung reduziert werden.

## Patentansprüche

1. Verfahren zum Steuern einer Windenergieanlage (100, 302) mit einem aerodynamischen Rotor (106) mit in ihrem Blattwinkel verstellbaren Rotorblättern (108), umfassend die Schritte

- Betreiben der Windenergieanlage (100, 302) in einem Teillastbereich,
- mit einer Rotordrehzahl unterhalb einer Nenndrehzahl ($n_N$) und
- mit einer Abgabeleistung unterhalb einer Nennleistung,
- Verwenden

  - einer Drehzahl-Leistungskennlinie, die einen Zusammenhang zwischen einer sich in Abhängigkeit des vorherrschenden Windes einstellenden Rotordrehzahl und einer dazu einzustellenden Abgabeleistung angibt, oder
  - einer Drehzahl-Drehmomentkennlinie, die einen Zusammenhang zwischen einer sich in Abhängigkeit des vorherrschenden Windes einstellenden Rotordrehzahl und einem dazu einzustellenden Drehmoment angibt,

- Einstellen

  - einer Abgabeleistung gemäß der Drehzahl-Leistungskennlinie, bzw.
  - eines Drehmomentes gemäß der Drehzahl-Drehmomentkennlinie, wobei

- die Drehzahl-Leistungskennlinie bzw. die Drehzahl-Drehmomentkennlinie im Bereich einer zu vermeidenden Problemdrehzahl (np) einen Hysterese-Bereich (204) aufweist, und wobei die Windenergieanlage (100, 302) so betrieben wird, dass
- bei zunehmendem Wind bis zu einer unteren Grenzdrehzahl ($n_u$) eine Abgabeleistung gemäß der Drehzahl-Leistungskennlinie eingestellt wird bzw. ein Drehmoment gemäß der Drehzahl-Drehmomentkennlinie eingestellt wird,
- ab der unteren Grenzdrehzahl ($n_u$) bei weiter zunehmendem Wind die Rotordrehzahl im Wesentlichen konstant gehalten und die Abgabeleistung bzw. das Drehmoment erhöht wird, bis die Abgabeleistung eine obere Grenzleistung ($P_o$) erreicht hat, oder ein oberes Grenzmoment erreicht wird, und
- bei Erreichen der oberen Grenzleistung ($P_o$) bzw. des oberen Grenzmomentes, nach Abwarten einer vorgegebenen Umschaltverzögerung, die Rotordrehzahl bis zu einer oberen Grenzdrehzahl ($n_o$) erhöht wird, insbesondere möglichst schnell erhöht wird, um die Problemdrehzahl (np) zu durchsteuern, und
- bei wieder abnehmendem Wind, wenn die Rotordrehzahl zunächst oberhalb der oberen Grenzdrehzahl ($n_o$) liegt, bis zu der oberen Grenzdrehzahl ($n_o$) eine Abgabeleistung gemäß der Drehzahl-Leistungskennlinie eingestellt wird, bzw. ein Drehmoment gemäß der Drehzahl-Drehmomentkennlinie eingestellt wird, und
- ab der oberen Grenzdrehzahl ($n_o$) bei weiter abnehmendem Wind die Rotordrehzahl im Wesentlichen konstant gehalten und die Abgabeleistung verringert wird, bis die Abgabeleistung eine untere Grenzleistung ($P_u$) erreicht hat, bzw. das Drehmoment verringert wird, bis ein unteres Grenzmoment erreicht wird, und
- bei Erreichen der unteren Grenzleistung ($P_u$) bzw. des unteren Grenzmomentes, nach Abwarten der vorgegebenen odereinerweiteren vorgegebenen Umschaltverzögerung, die Rotordrehzahl bis zu der unteren Grenzdrehzahl ($n_u$) verringert wird, insbesondere möglichst schnell verringert wird, um die Problemdrehzahl ($n_P$) zu durchsteuern.

**2.** Verfahren nach Anspruch 1,
**dadurch gekennzeichnet, dass**
in dem Hysterese-Bereich das Einstellen der Abgabeleistung bzw. des Drehmomentes über eine Drehzahlregelung erfolgt, indem die Rotordrehzahl durch Einstellen der Abgabeleistung bzw. des Drehmomentes auf einen vorbestimmten Drehzahlsollwert geregelt wird.

**3.** Verfahren nach Anspruch 1 oder 2,
**dadurch gekennzeichnet, dass**
in dem Hysterese-Bereich der Blattwinkel in Abhängigkeit der Abgabeleistung bzw. des Drehmomentes, und/oder der Drehzahl eingestellt wird

**4.** Verfahren nach einem der vorstehenden Ansprüche,
**dadurch gekennzeichnet, dass**

- der Hysterese-Bereich von einer vorbestimmten unteren Grenzdrehzahl ($n_u$), unterhalb der Problemdrehzahl ($n_P$) bis zu einer oberen Grenzdrehzahl ($n_o$) oberhalb der Problemdrehzahl ($n_P$) reicht und/oder dass
- die Problemdrehzahl ($n_P$) eine Resonanzdrehzahl ist.

**5.** Verfahren nach einem der vorstehenden Ansprüche,
**dadurch gekennzeichnet, dass**
der Hysterese-Bereich folgende Abschnitte aufweist:

- einen bis zu der oberen Grenzleistung ($P_o$) bzw. dem oberen Grenzmoment für Rotordrehzahlen unterhalb der Problemdrehzahl (np) ansteigenden ersten Hysterese-Abschnitt (211),
- einen sich an den ersten Hysterese-Abschnitt (211) anschließenden zweiten Hysterese-Abschnitt (212), der bis zu einer Rotordrehzahl oberhalb der Problemdrehzahl ($n_P$) verläuft,
- einen bis zu der unteren Grenzleistung bzw. dem unteren Grenzmoment für Rotordrehzahlen oberhalb der Problemdrehzahl (np) abfallenden dritten Hysterese-Abschnitt (213) und
- einen sich an den dritten Hysterese-Abschnitt (213) anschließenden vierten Hysterese-Abschnitt (214), der bis zu einer Rotordrehzahl unterhalb der Problemdrehzahl ($n_P$) verläuft.

**6.** Verfahren nach Anspruch 5,
**dadurch gekennzeichnet, dass**

- der erste Hysterese-Abschnitt (211) von der unteren Grenzdrehzahl ($n_u$) bis zur oberen Grenzleistung ($P_o$) bzw. bis zum oberen Grenzmoment ansteigt, insbesondere bei im Wesentlichen gleichbleibender Rotordrehzahl, und außerdem oder alternativ
- der zweite Hysterese-Abschnitt (212) bis zu der oberen Grenzdrehzahl ($n_o$) verläuft, insbesondere bei im Wesentlichen gleichbleibender Abgabeleistung bzw. gleichbleibendem Drehmoment, und außerdem oder alternativ,
- der dritte Hysterese-Abschnitt (213) von der oberen Grenzdrehzahl ($n_o$) bis zur unteren Grenzleistung ($P_u$) bzw. bis zum unteren Grenzmoment abfällt, insbesondere bei im Wesentlichen gleichbleibender Rotordrehzahl, und außerdem oder alternativ
- der vierte Hysterese-Abschnitt (214) bis zu der unteren Grenzdrehzahl ($n_u$) verläuft, insbesondere bei im Wesentlichen gleichbleibender Abgabeleistung bzw. gleichbleibendem Drehmoment.

**7.** Verfahren nach einem der Ansprüche 1 bis 5,
**dadurch gekennzeichnet, dass**
bei dem Erreichen der oberen Grenzleistung ($P_o$) bzw. des oberen Grenzmomentes, nach Abwarten der vorgegebenen Umschaltverzögerung, die Rotordrehzahl bis zu der oberen Grenzdrehzahl ($n_o$) erhöht und die Abgabeleistung reduziert wird, um die Problemdrehzahl ($n_P$) zu durchsteuern, und/oder

- bei dem Erreichen der unteren Grenzleistung ($P_u$) bzw. des unteren Grenzmomentes, nach Abwarten der vorgegebenen oder der weiteren vorgegebenen Umschaltverzögerung, die Rotordrehzahl bis zu der unteren Grenzdrehzahl ($n_u$) verringert wird und die Abgabeleistung erhöht wird, um die Problemdrehzahl ($n_P$) zu durchsteuern.

8. Verfahren nach Anspruch 5 oder 6, oder nach Anspruch 7, wenn abhängig von Anspruch 5,
**dadurch gekennzeichnet, dass**

- zum Betreiben der Windenergieanlage (100, 302) im Hysterese-Bereich (204) der Drehzahl-Leistungskennlinie bzw. der Drehzahl-Drehmomentkennlinie ein auf den Rotor (106) wirkendes mechanisches Drehmoment ($T_{mech}$) aufgenommen wird, insbesondere, dass
- ein Zustandsbeobachter zum Aufnehmen des mechanischen Drehmoments ($T_{mech}$) verwendet wird, insbesondere um das Erreichen des oberen und/oder unteren Grenzdrehmomentes zu erfassen, wobei
- insbesondere ein mechanisches Drehmoment ($T_{mech}$) beim Betreiben der Windenergieanlage (100, 302) im ersten und/oder dritten Hysterese-Abschnitt des Hysterese-Bereichs (204) beobachtet wird.

9. Verfahren nach Anspruch 5 oder 6, oder nach einem der Ansprüche 7-8, wenn abhängig von Anspruch 5,
**dadurch gekennzeichnet, dass**

- zum Umschalten vom ersten zum zweiten Hysterese-Abschnitt ein von einer Leistung oder einem Drehmoment abhängiges erstes Umschaltkriterium zu Grunde gelegt wird, und insbesondere
- das erste Umschaltkriterium so ausgestaltet ist, dass zum Umschalten vom ersten zum zweiten Hysterese-Abschnitt die vorgegebene Umschaltverzögerung abgewartet wird und das Umschalten dann erfolgt, wenn während der gesamten Umschaltverzögerung die obere Grenzleistung ($P_o$) bzw. das obere Grenzmoment erreicht oder überschritten ist und/oder
- zum Umschalten vom dritten zum vierten Hysterese-Abschnitt ein von einer Leistung oder einem Drehmoment abhängiges zweites Umschaltkriterium zu Grunde gelegt wird, und insbesondere
- das zweite Umschaltkriterium so ausgestaltet ist, dass zum Umschalten vom dritten zum vierten Hysterese-Abschnitt. die vorgegebene oder weitere vorgegebene Umschaltverzögerung abgewartet wird und das Umschalten dann erfolgt, wenn während der gesamten Umschaltverzögerung bzw. weiteren Umschaltverzögerung die untere Grenzleistung ($P_u$) bzw. das untere Grenzmoment erreicht oder unterschritten ist.

10. Verfahren nach einem der vorstehenden Ansprüche,
**dadurch gekennzeichnet, dass**
der bzw. ein zur Ermittlung des mechanischen Drehmomentes ($T_{mech}$) und ggf. der verfügbaren Leistung verwendeter Zustandsbeobachter die Drehzahl des Generators und das mechanische Drehmoment ($T_{mech}$) des Generators als zu beobachtende Zustandsgrößen aufweist.

11. Verfahren nach einem der vorstehenden Ansprüche,

**dadurch gekennzeichnet, dass**
der bzw. ein zur Ermittlung des mechanischen Drehmomentes ($T_{mech}$) verwendeter Zustandsbeobachter definiert ist durch die Struktur:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

in der

- J das gemeinsame Trägheitsmoment des Rotors (106) und Generators bezeichnet,
- $\omega$ die Drehzahl des Generators ist,
- $k_\omega$ und $k_T$ Parameter zur Beeinflussung der Dynamik des Beobachters sind,
- $T_{el}$ als elektrisches Drehmoment ($T_{el}$) bezeichnet wird und sich als Quotient vom Generator abgegebener Leistung P und der Drehzahl $\omega$ berechnet und
- $T_{mech}$, das mechanische Drehmoment ($T_{mech}$) des Rotors (106) bezeichnet, wobei

die beobachteten Größen mit einem ^-Zeichen und Ableitungen nach der Zeit mit einem hochgestellten Punkt gekennzeichnet sind, wobei vorzugsweise eine verfügbare Leistung als Produkt aus beobachteter Drehzahl $\hat{\omega}$ und beobachtetem mechanischen Drehmoment $\hat{T}_{mech}$ berechnet wird, wobei diese verfügbare Leistung als mechanische Leistung ($P_{mech}$) und insbesondere als Abgabeleistung verwendet werden kann, um zu prüfen, ob sie die obere oder untere Grenzleistung erreicht bzw. über- oder unterschreitet.

**12.** Verfahren nach Anspruch 5 oder 6, oder nach einem der Ansprüche 7-11, wenn abhängig von Anspruch 5,
**dadurch gekennzeichnet, dass**

- im ersten Hysterese-Abschnitt (211) für die Rotordrehzahl als Drehzahlsollwert die untere Grenzdrehzahl ($n_u$) vorgegeben wird und die Rotordrehzahl auf die untere Grenzdrehzahl ($n_u$) als Drehzahlsollwert durch Verstellen der Abgabeleistung geregelt wird,
- bei Erreichen der oberen Grenzleistung ($P_o$) bzw. des oberen Grenzdrehmomentes im ersten Hysterese-Abschnitt (211) in den zweiten Hysterese-Abschnitt (212) gewechselt wird und für die Rotordrehzahl als Drehzahlsollwert die obere Grenzdrehzahl ($n_o$) vorgegeben wird, so dass dann die Rotordrehzahl auf die obere Grenzdrehzahl ($n_o$) als Drehzahlsollwert durch Verstellen der Abgabeleistung bzw. Verstellen des Drehmomentes geregelt wird, wobei insbesondere beim Erreichen des zweiten Hysterese-Abschnitts (212) vom ersten Hysterese-Abschnitt (211) aus der Drehzahlsollwert sprungartig von der unteren Grenzdrehzahl ($n_u$) auf die obere Grenzdrehzahl ($n_o$) erhöht wird,
- im dritten Hysterese-Abschnitt (213) für die Rotordrehzahl als Drehzahlsollwert die obere Grenzdrehzahl ($n_o$) vorgegeben wird, und die Rotordrehzahl auf die obere Grenzdrehzahl ($n_o$) als Drehzahlsollwert durch Verstellen der Abgabeleistung bzw. Verstellen des Drehmomentes geregelt wird und/oder
- bei Erreichen der unteren Grenzleistung ($P_u$) bzw. des unteren Grenzdrehmomentes im dritten Hysterese-Abschnitt (213) in den vierten Hysterese-Abschnitt (214) gewechselt wird und für die Rotordrehzahl als Drehzahlsollwert die untere Grenzdrehzahl ($n_u$) vorgegeben wird und die Rotordrehzahl auf die untere Grenzdrehzahl ($n_u$) als Drehzahlsollwert durch Verstellen der Abgabeleistung bzw. Verstellen des Drehmomentes geregelt wird, wobei insbesondere beim Erreichen des vierten Hysterese-Abschnitts (214) vom dritten Hysterese-Abschnitt (213) aus der Drehzahlsollwert sprungartig von der oberen Grenzdrehzahl ($n_o$) auf die untere Grenzdrehzahl ($n_u$) verringert wird.

**13.** Verfahren nach einem der vorstehenden Ansprüche,
**dadurch gekennzeichnet, dass**

- eine bzw. die Drehzahlregelung des Hysterese-Bereichs (204) beendet wird, wenn

- die Rotordrehzahl um einen vorbestimmten Schwellwert unter die untere Grenzdrehzahl ($n_u$) abfällt, oder
- die Rotordrehzahl um einen weiteren oder denselben vorbestimmten Schwellwert über die obere Grenzdrehzahl ($n_o$) ansteigt, oder
- die Abgabeleistung die untere Grenzleistung ($P_u$) unterschreitet oder
- die obere Grenzleistung ($P_o$) überschreitet bzw. wenn
- ein Drehmoment, insbesondere das mechanische Drehmoment ($T_{mech}$) des Rotors (106) des Generators das untere Grenzmoment unterschreitet oder
- das obere Grenzmoment überschreitet.

**14.** Verfahren nach einem der vorstehenden Ansprüche,
**dadurch gekennzeichnet, dass**

- die untere und die obere Grenzdrehzahl ($n_u$, $n_o$) in Abhängigkeit einer vorgegebenen gewünschten Häufigkeit eines Durchfahrens des Hysterese-Bereichs (204) gewählt wird und/oder dass
- die untere und die obere Grenzdrehzahl ($n_u$, $n_o$) um eine vorgegebene Drehzahldifferenz unterhalb bzw. oberhalb der Problemdrehzahl (np) liegen.

**15.** Windenergieanlage (100, 302) mit einem aerodynamischen Rotor (106) mit in ihrem Blattwinkel verstellbaren Rotorblättern (108), umfassend eine Steuereinrichtung, **dadurch gekennzeichnet, dass** die Windenergieanlage (100, 302) dazu vorbereitet ist, wenigstens ein Verfahren gemäß einem der Ansprüche 1 bis 14 auszuführen, insbesondere, dass wenigstens ein Verfahren gemäß einem der Ansprüche 1 bis 14 in der Steuereinrichtung implementiert ist, wobei die Steuereinrichtung vorbereitet ist zum Durchführen der Schritte

- Betreiben der Windenergieanlage (100, 302) in einem Teillastbereich,
- mit einer Rotordrehzahl unterhalb einer Nenndrehzahl ($n_N$) und
- mit einer Abgabeleistung unterhalb einer Nennleistung,
- Verwenden

- einer Drehzahl-Leistungskennlinie, die einen Zusammenhang zwischen einer sich in Abhängigkeit des vorherrschenden Windes einstellenden Rotordrehzahl und einer dazu einzustellenden Abgabeleistung angibt, oder

- einer Drehzahl-Drehmomentkennlinie, die einen Zusammenhang zwischen einer sich in Abhängigkeit des vorherrschenden Windes einstellenden Rotordrehzahl und eines dazu einzustellenden Drehmomentes angibt,

- Einstellen

- einer Abgabeleistung gemäß der Drehzahl-Leistungskennlinie, bzw.
- eines Drehmomentes gemäß der Drehzahl-Drehmomentkennlinie, wobei

- die Drehzahl-Leistungskennlinie bzw. die Drehzahl-Drehmomentkennlinie im Bereich einer zu vermeidenden Problemdrehzahl (np) einen Hysterese-Bereich (204) aufweist.

**Claims**

1. Method for controlling a wind turbine (100, 302) having an aerodynamic rotor (106) having rotor blades (108) which can be adjusted in terms of their blade angle, comprising the steps of:

- operating the wind turbine (100, 302) in a part-load range,
- at a rotor speed below a nominal speed ($n_N$) and
- having a power output below a nominal power,
- using
- a speed/power characteristic line which indicates a relationship between a rotor speed which is adjusted depending on the prevailing wind and a power output which is intended to be adjusted, or
- a speed/torque characteristic line which indicates a relationship between a rotor speed which is adjusted depending on the prevailing wind and a torque which is intended to be adjusted,
- adjusting
- a power output according to the speed/power characteristic line, or
- a torque according to the speed/torque characteristic line, wherein
- the speed/power characteristic line or the speed torque characteristic line has in the range of a problem speed ($n_p$) which is intended to be avoided a hysteresis range (204), and wherein

the wind turbine (100, 302) is operated in such a manner that

- with increasing wind up to a lower limit speed ($n_u$), a power output according to the speed/power characteristic line is adjusted or a torque according to the speed/torque characteristic line is adjusted,
- from the lower limit speed ($n_u$) with further increasing wind, the rotor speed is kept substantially constant and the power output or the torque is increased until the power output has reached an upper limit power ($P_o$), or an upper limit torque is reached, and
- when the upper limit power ($P_o$) or the upper limit torque is reached, after waiting for a predetermined switching delay, the rotor speed is increased to an upper limit speed ($n_o$), in particular is increased as rapidly as possible, in order to pass the problem speed ($n_p$), and
- with further decreasing wind, when the rotor speed is initially above the upper limit speed ($n_o$) up to the upper limit speed ($n_o$), a power output is adjusted according to the speed/power characteristic line, or a torque is adjusted according to the speed/torque characteristic line, and
- from the upper limit speed ($n_o$) with further decreasing wind, the rotor speed is kept substantially constant and the power output is decreased until the power output has reached a lower limit power ($P_u$) or the torque is decreased until a lower limit torque is reached, and
- when the lower limit power ($P_u$) is reached or the lower limit torque is reached after waiting for the predetermined or another predetermined switching delay, the rotor speed is decreased to the lower limit speed ($n_u$), in particular decreased as rapidly as possible, in order to pass the problem speed ($n_p$).

2. Method according to claim 1,
   **characterised in that**,
   in the hysteresis range, the adjustment of the power output or the torque is carried out by means of a speed control by the rotor speed being regulated to a predetermined desired speed value by adjusting the power output or the torque.

**3.** Method according to claim 1 or 2,
**characterised in that**,
in the hysteresis range, the blade angle is adjusted in accordance with the power output or the torque and/or the speed.

**4.** Method according to any one of the preceding claims, **characterised in that**

- the hysteresis range extends from a predetermined lower limit speed ($n_u$) below the problem speed ($n_p$) to an upper limit speed ($n_o$) above the problem speed ($n_p$) and/or **in that**
- the problem speed ($n_p$) is a resonance speed.

**5.** Method according to any one of the preceding claims,
**characterised in that**
the hysteresis range has the following portions:

- a first hysteresis portion (211) which increases to the upper limit power ($P_o$) or the upper limit torque for rotor speeds below the problem speed ($n_p$),
- a second hysteresis portion (212) which adjoins the first hysteresis portion (211) and which extends up to a rotor speed above the problem speed ($n_p$),
- a third hysteresis portion (213) which falls to the lower limit power or the lower torque for rotor speeds above the problem speed ($n_p$),
- a fourth hysteresis portion (214) which adjoins the third hysteresis portion (213) and which extends up to a rotor speed below the problem speed ($n_p$).

**6.** Method according to claim 5,
**characterised in that**

- the first hysteresis portion (211) increases from the lower limit speed ($n_u$) to the upper limit power ($P_o$) or the upper limit torque, in particular with the rotor speed remaining substantially constant and, additionally or alternatively,
- the second hysteresis portion (212) extends up to the upper limit speed ($n_o$), in particular with the power output or torque remaining substantially constant and, additionally or alternatively,
- the third hysteresis portion (213) falls from the upper limit speed ($n_o$) to the lower limit power ($P_u$) or to the lower limit torque, in particular with the rotor speed remaining substantially constant and, additionally or alternatively,
- the fourth hysteresis portion (214) extends up to the lower limit speed ($n_u$), in particular with the power output or torque remaining substantially constant.

**7.** Method according to any one of claims 1 to 5,
**characterised in that**,
when the upper limit power ($P_o$) or the lower limit torque is reached, after waiting for the predetermined switching delay, the rotor speed increases to the upper limit speed ($n_o$) and the power output is reduced in order to pass the problem speed ($n_p$), and/or

- when the lower limit power ($P_u$) or the lower limit torque is reached, after waiting for the predetermined or additional predetermined switching delay, the rotor speed is reduced to the lower limit speed ($n_u$) and the power output is increased in order to pass the problem speed ($n_p$).

**8.** Method according to claim 5 or 6, or according to claim 7 when dependent on claim 5, **characterised in that**

- in order to operate the wind turbine (100, 302) in the hysteresis range (204) of the speed/power characteristic line or the speed/torque characteristic line, a mechanical torque ($T_{mech}$) acting on the rotor (106) is recorded, in particular **in that**
- a state monitor is used to record the mechanical torque ($T_{mech}$), in particular in order to detect that the upper and/or lower limit torque has been reached, wherein
- in particular a mechanical torque ($T_{mech}$) is monitored when operating the wind turbine (100, 302) in the first and/or in the third hysteresis portion of the hysteresis range (204).

**9.** Method according to claim 5 or 6 or according to any one of claims 7-8 when dependent on claim 5,

**characterised in that**,

- in order to switch from the first to the second hysteresis portion, a first switching criterion which is dependent on a power or a torque is taken as a basis, and in particular
- the first switching criterion is configured in such a manner that, in order to switch from the first to the second hysteresis portion, there is a wait for the predetermined switching delay and the switching is then carried out if during the entire switching delay the upper limit power ($P_u$) or the upper limit torque is reached or exceeded and/or
- in order to switch from the third to the fourth hysteresis portion, a second switching criterion which is dependent on a power or a torque is taken as a basis, and in particular - the second switching criterion is configured in such a manner that, in order to switch from the third to the fourth hysteresis portion, there is a wait for the predetermined or additional predetermined switching delay and the switching is then carried out if during the entire switching delay or additional switching delay a value reaches or falls below the lower limit power ($P_u$) or the lower limit torque.

10. Method according to any one of the preceding claims,
    **characterised in that**
    the or a state monitor used to establish the mechanical torque ($T_{mech}$) and where applicable the available power has the speed of the generator and the mechanical torque ($T_{mech}$) of the generator as state variables to be monitored.

11. Method according to any one of the preceding claims,
    **characterized in that** the or a state monitor used to establish the mechanical torque ($T_{mech}$) is defined by the structure:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

where

- J denotes the common moment of inertia of the rotor (106) and generator,
- $\omega$ is the speed of the generator,
- $k_\omega$ and $k_T$ are parameters for influencing the dynamic of the monitor,
- $T_{el}$ is referred to as an electrical torque ($T_{el}$) and is calculated as the quotient of power P discharged by the generator and the speed $\omega$, and
- $T_{mech}$ denotes the mechanical torque ($T_{mech}$) of the rotor (106), wherein

the monitored variables are identified with a ^ symbol and derivatives with respect to time are identified with a superscript dot, wherein an available power is preferably calculated as the product from the monitored speed $\hat{\omega}$ and monitored mechanical torque $\hat{T}_{mech}$, wherein this available power can be used as a mechanical power ($P_{mech}$) and in particular as a power output and in order to verify whether it has reached or exceeded or fallen below the upper or lower limit power.

12. Method according to claim 5 or 6, or according to any one of claims 7-11, when dependent on claim 5,
    **characterised in that**

- in the first hysteresis portion (211) for the rotor speed the lower limit speed ($n_u$) is predetermined as the desired speed value and the rotor speed is regulated to the lower limit speed ($n_u$) as a desired speed value by adjusting the power output,
- when the upper limit power ($P_o$) or the upper limit torque is reached in the first hysteresis portion (211) a change is made to the second hysteresis portion (212) and for the rotor speed as a desired speed value the upper limit speed ($n_o$) is predetermined so that the rotor speed is then regulated to the upper limit speed ($n_o$) as a desired speed value by adjusting the power output or adjusting the torque, wherein in particular when the second hysteresis portion (212) is reached from the first hysteresis portion (211) the desired speed value is abruptly increased from the lower limit speed ($n_u$) to the upper limit speed ($n_o$),
- in the third hysteresis portion (213) for the rotor speed the upper limit speed ($n_o$) is predetermined as a desired speed value and the rotor speed is regulated to the upper limit speed ($n_o$) as a desired speed value by adjusting the power output or adjusting the torque, and/or
- when the lower limit power ($P_u$) or the lower limit torque is reached in the third hysteresis portion (213), a change is made to the fourth hysteresis portion (214) and for the rotor speed the lower limit speed ($n_u$) is predetermined as the desired speed value and the rotor speed is regulated to the lower limit speed ($n_u$) as the desired speed value by adjusting the power output or adjusting the torque, wherein in particular when the fourth hysteresis portion (214) is reached from the third hysteresis portion (213) the desired speed value is abruptly decreased from the upper limit speed ($n_o$) to the lower limit speed ($n_u$).

13. Method according to any one of the preceding claims, **characterised in that**

  - a or the speed control of the hysteresis range (204) is ended when
  - the rotor speed drops by a predetermined threshold value below the lower limit speed ($n_u$), or
  - the rotor speed rises by another or the same predetermined threshold value above the upper limit speed ($n_o$), or
  - the power output falls below the lower limit power ($P_u$) or - exceeds the upper limit power ($P_o$) when
  - a torque, in particular the mechanical torque ($T_{mech}$) of the rotor (106) of the generator falls below the lower limit torque or
  - exceeds the upper limit torque.

14. Method according to any one of the preceding claims, **characterised in that**

  - the lower and the upper limit speed ($n_u$, $n_o$) are selected depending on a predetermined desired frequency of passing the hysteresis range (204) and/or **in that**
  - the lower and the upper limit speed ($n_u$, $n_o$) are located by a predetermined speed difference below or above the problem speed ($n_p$).

15. Wind turbine (100, 302) having an aerodynamic rotor (106) having rotor blades (108) which can be adjusted in terms of the blade angle thereof, comprising a control device, **characterised in that** the wind turbine (100, 302) is provided to carry out at least one method according to any one of claims 1 to 14, in particular **in that** at least one method according to any one of claims 1 to 14 is implemented in the control device, wherein the control device is provided to carry out the steps of:

  - operating the wind turbine (100, 302) in a part-load range,
  - at a rotor speed below a nominal speed ($n_N$) and
  - with a power output below a nominal power,
  - using
  - a speed/power characteristic line which indicates a relationship between a rotor speed which is adjusted depending on the prevailing wind and a power output which is intended to be adjusted, or
  - a speed/torque characteristic line which indicates a relationship between a rotor speed which is adjusted depending on the prevailing wind and a torque which is intended to be adjusted,
  - adjusting
  - a power output according to the speed/power characteristic line, or
  - a torque according to the speed/torque characteristic line, wherein
  - the speed/power characteristic line or the speed/torque characteristic line has in the range of a problem speed ($n_p$) which is intended to be avoided a hysteresis range (204).

**Revendications**

1. Procédé pour commander une éolienne (100, 302) avec un rotor (106) aérodynamique avec des pales de rotor (108) pouvant être ajustées dans leur angle de pale, comprenant les étapes

  - de fonctionnement de l'éolienne (100, 302) dans une plage de régime partiel,

    - - avec une vitesse de rotation de rotor inférieure à une vitesse de rotation nominale ($n_N$) et
    - - avec une puissance de sortie inférieure à une puissance nominale,

  - d'utilisation

- - d'une courbe caractéristique de vitesse de rotation-puissance, qui indique un lien entre une vitesse de rotation de rotor se réglant en fonction du vent prédominant et une puissance de sortie à régler de manière correspondante, ou

- - d'une courbe caractéristique de vitesse de rotation-couple de rotation, qui indique un lien entre une vitesse de rotation de rotor se réglant en fonction du vent prédominant et un couple de rotation à régler de manière correspondante,

- de réglage

- - d'une puissance de sortie selon la courbe caractéristique de vitesse de rotation-puissance ou

- d'un couple de rotation selon la courbe caractéristique de vitesse de rotation-couple de rotation, dans lequel
- la courbe caractéristique de vitesse de rotation-puissance ou la courbe caractéristique de vitesse de rotation-couple de rotation présente, dans la plage d'une vitesse de rotation problématique ($n_P$) à éviter, une plage d'hystérésis (204), et dans lequel l'éolienne (100, 302) fonctionne de telle sorte que
- lorsque le vent devient plus fort, une puissance de sortie est réglée selon la courbe de caractéristique vitesse de rotation-puissance jusqu'à une vitesse de rotation limite inférieure ($n_u$) ou un couple de rotation est réglé selon la courbe caractéristique de vitesse de rotation-couple de rotation,
- à partir de la vitesse de rotation limite inférieure ($n_u$), lorsque le vent continue à devenir plus fort, la vitesse de rotation de rotor est maintenue de manière sensiblement constante et la puissance de sortie ou le couple de rotation est augmenté/augmentée jusqu'à ce que la puissance de sortie ait atteint une puissance limite supérieure ($P_o$) ou jusqu'à ce qu'un couple limite supérieur soit atteint, et
- lorsque la puissance limite supérieure ($P_o$) ou le couple limite supérieur est atteint, après avoir attendu un délai de commutation spécifié, la vitesse de rotation de rotor est augmentée jusqu'à une vitesse de rotation limite supérieure ($n_O$), en particulier est augmentée aussi vite que possible pour commander la vitesse de rotation problématique ($n_p$),
et
- lorsque le vent redevient moins fort quand la vitesse de rotation de rotor est d'abord supérieure à la vitesse de rotation limite supérieure ($n_O$), une puissance de sortie est réglée selon la courbe caractéristique de vitesse de rotation-puissance jusqu'à la vitesse de rotation limite supérieure ($n_O$), ou un couple de rotation est réglé selon la courbe caractéristique de vitesse de rotation-couple de rotation, et
- à partir de la vitesse de rotation limite supérieure ($n_O$), lorsque le vent continue à devenir moins fort, la vitesse de rotation de rotor est maintenue de manière sensiblement constante et la puissance de sortie est réduite jusqu'à ce que la puissance de sortie ait atteint une puissance limite inférieure ($P_u$) ou le couple de rotation est réduit jusqu'à ce qu'un couple limite inférieur soit atteint, et
- lorsque la puissance limite inférieure ($P_u$) ou le couple limite inférieur est atteinte ou atteint, après avoir attendu le délai de commutation spécifié ou un autre délai de commutation spécifié, la vitesse de rotation de rotor est réduite jusqu'à la vitesse de rotation limite inférieure ($n_u$), en particulier elle est réduite aussi vite que possible pour commander la vitesse de rotation problématique ($n_P$).

2. Procédé selon la revendication 1,
**caractérisé en ce que**
le réglage de la puissance de sortie ou du couple de rotation est effectué dans la plage d'hystérésis par l'intermédiaire d'une régulation de vitesse de rotation **en ce que** la vitesse de rotation de rotor est régulée en réglant la puissance de sortie ou le couple de rotation sur une valeur théorique de vitesse de rotation prédéfinie.

3. Procédé selon la revendication 1 ou 2,
**caractérisé en ce que**
dans la plage d'hystérésis, l'angle de pale est réglé en fonction de la puissance de sortie ou du couple de rotation et/ou de la vitesse de rotation.

4. Procédé selon l'une quelconque des revendications précédentes,
**caractérisé en ce que**

- la plage d'hystérésis va d'une vitesse de rotation limite inférieure ($n_u$) prédéfinie inférieure à la vitesse de rotation problématique ($n_P$) à une vitesse de rotation limite supérieure ($n_O$) supérieure à la vitesse de rotation problématique ($n_P$), et/ou que
- la vitesse de rotation problématique ($n_P$) est une vitesse de rotation de résonance.

**5.** Procédé selon l'une quelconque des revendications précédentes,
**caractérisé en ce que**
la plage d'hystérésis présente des segments suivants :

- un premier segment d'hystérésis (211) augmentant jusqu'à la puissance limite supérieure ($P_O$) ou le couple limite supérieur pour des vitesses de rotation de rotor inférieures à la vitesse de rotation problématique ($n_P$),
- un deuxième segment d'hystérésis (212) situé dans le prolongement du premier segment d'hystérésis (211), qui s'étend jusqu'à une vitesse de rotation de rotor supérieure à la vitesse de rotation problématique ($n_P$),
- un troisième segment d'hystérésis (213) baissant jusqu'à la puissance limite inférieure ou le couple limite inférieur pour des vitesses de rotation de rotor supérieures à la vitesse de rotation problématique ($n_P$), et
- un quatrième segment d'hystérésis (214) situé dans le prolongement du troisième segment d'hystérésis (213), qui s'étend jusqu'à une vitesse de rotation de rotor inférieure à la vitesse de rotation problématique ($n_P$) .

**6.** Procédé selon la revendication 5,
**caractérisé en ce que**

- le premier segment d'hystérésis (211) augmente depuis la vitesse de rotation limite inférieure ($n_u$) jusqu'à la puissance limite supérieure ($P_O$) ou jusqu'au couple limite supérieur en particulier lorsque la vitesse de rotation de rotor reste sensiblement constante, et par ailleurs ou en variante
- le deuxième segment d'hystérésis (212) s'étend jusqu'à la vitesse de rotation limite supérieure ($n_O$), en particulier lorsque la puissance de sortie reste sensiblement constante ou lorsque le couple de rotation reste constant, et par ailleurs ou en variante,
- le troisième segment d'hystérésis (213) baisse depuis la vitesse de rotation limite supérieure ($n_o$) à la puissance limite inférieure ($P_U$) ou jusqu'au couple limite inférieur, en particulier lorsque la vitesse de rotation de rotor reste sensiblement constante, et par ailleurs ou en variante,
- le quatrième segment d'hystérésis (214) s'étend jusqu'à la vitesse de rotation limite inférieure ($n_U$), en particulier lorsque la puissance de sortie reste sensiblement constante ou que le couple de rotation reste constant.

**7.** Procédé selon l'une quelconque des revendications 1 à 5,
**caractérisé en ce que**
lorsque la puissance limite supérieure ($P_O$) ou le couple limite supérieur est atteinte ou atteint, après avoir attendu le délai de commutation spécifié, la vitesse de rotation de rotor augmente jusqu'à la vitesse de rotation limite supérieure ($n_o$) et la puissance de sortie est réduite pour commander la vitesse de rotation problématique ($n_P$), et/ou

- lorsque la puissance limite inférieure ($P_U$) ou le couple limite inférieur est atteinte ou atteint, après avoir attendu le délai de commutation spécifié ou l'autre délai de commutation spécifié, la vitesse de rotation de rotor est réduite jusqu'à la vitesse de rotation limite inférieure ($n_u$) et la puissance de sortie est augmentée pour commander la vitesse de rotation problématique ($n_P$) .

**8.** Procédé selon la revendication 5 ou 6 ou selon la revendication 7, si elle dépend de la revendication 5,
**caractérisé en ce que**

- pour faire fonctionner l'éolienne (100, 302), un couple de rotation mécanique ($T_{mech}$) agissant sur le rotor (106) est enregistré dans la plage d'hystérésis (204) de la courbe caractéristique de vitesse de rotation-puissance ou de la courbe caractéristique de vitesse de rotation-couple de rotation, en particulier que
- un observateur d'état est utilisé pour enregistrer le couple de rotation mécanique ($T_{mech}$), en particulier pour détecter l'atteinte du couple de rotation limite supérieur et/ou inférieur, dans lequel
- en particulier un couple de rotation mécanique ($T_{mech}$) est observé lors du fonctionnement de l'éolienne (100, 302) dans le premier et/ou le troisième segment d'hystérésis de la plage d'hystérésis (204).

**9.** Procédé selon la revendication 5 ou 6, ou selon l'une quelconque des revendications 7-8 si elles dépendent de la revendication 5,
**caractérisé en ce que**

- pour commuter depuis le premier vers le deuxième segment d'hystérésis, un premier critère de commutation dépendant d'une puissance ou d'un couple de rotation est appliqué, et en particulier
- le premier critère de commutation est configuré de telle sorte que pour commuter depuis le premier vers le deuxième segment d'hystérésis, le délai de commutation spécifié est attendu et la commutation est alors effectuée quand, au cours du délai de commutation total, la puissance limite supérieure ($P_O$) ou le couple de rotation supérieur est atteinte ou atteint ou est dépassée ou dépassé, et/ou

- pour commuter depuis le troisième vers le quatrième segment d'hystérésis, un deuxième critère de commutation dépendant d'une puissance ou d'un couple de rotation est appliqué, et en particulier

- le deuxième critère de commutation est configuré de telle sorte que pour commuter depuis le troisième vers le quatrième segment d'hystérésis, le délai de commutation spécifié ou l'autre délai de commutation spécifié est attendu et la commutation est alors effectuée lorsqu'au cours du délai de commutation total ou de l'autre délai de commutation, la puissance limite inférieure ($P_U$) ou le couple limite inférieur est atteinte ou atteint ou n'est pas dépassée ou dépassé.

**10.** Procédé selon l'une quelconque des revendications précédentes,
**caractérisé en ce que** l'observateur d'état ou un observateur d'état utilisé pour déterminer le couple de rotation mécanique ($T_{mech}$) et éventuellement la puissance disponible présente la vitesse de rotation du générateur et le couple de rotation mécanique ($T_{mech}$) du générateur en tant que grandeurs d'état à observer.

**11.** Procédé selon l'une quelconque des revendications précédentes,
**caractérisé en ce que**
l'observateur d'état ou un observateur d'état utilisé pour déterminer le couple de rotation mécanique ($T_{mech}$) est défini par la structure :

$$\begin{bmatrix} \dot{\hat{\omega}} \\ \dot{\hat{T}}_{mech} \end{bmatrix} = \begin{bmatrix} -k_\omega & \dfrac{1}{J} \\ -k_T & 0 \end{bmatrix} \begin{bmatrix} \hat{\omega} \\ \hat{T}_{mech} \end{bmatrix} + \begin{bmatrix} k_\omega & -\dfrac{1}{J} \\ k_T & 0 \end{bmatrix} \begin{bmatrix} \omega \\ T_{el} \end{bmatrix}$$

dans laquelle

- J désigne le couple d'inertie commun du rotor (106) et du générateur,
- $\omega$ est la vitesse de rotation du générateur,
- $k\omega$ et $kT$ sont des paramètres pour influencer la dynamique de l'observateur,
- $T_{el}$ est désigné en tant que couple de rotation électrique ($T_{el}$) et se calcule en tant que quotient de la puissance P émise par le générateur et de la vitesse de rotation $\omega$, et
- $T_{mech}$ désigne le couple de rotation mécanique ($T_{mech}$) du rotor (106), dans lequel

les grandeurs observées sont **caractérisées par** un signe ^ et par des dérivées selon le temps avec un exposant, dans lequel de préférence une puissance disponible est calculée en tant que produit à partir de la vitesse de rotation observée $\hat{\omega}$ et du couple de rotation mécanique $\hat{T}_{mech}$ observé, dans lequel ladite puissance disponible peut être utilisée en tant que puissance mécanique ($P_{mech}$) et en particulier en tant que puissance de sortie pour vérifier si elle atteint ou dépasse ou ne dépasse pas la puissance limite supérieure ou la puissance limite inférieure.

**12.** Procédé selon la revendication 5 ou 6 ou selon l'une quelconque des revendications 7-11 si elles dépendent de la revendication 5,
**caractérisé en ce que**

- dans le premier segment d'hystérésis (211), la vitesse de rotation limite inférieure ($n_U$) est spécifiée pour la vitesse de rotation de rotor en tant que valeur théorique de vitesse de rotation et la vitesse de rotation de rotor est régulée sur la vitesse de rotation limite inférieure ($n_U$) en tant que valeur théorique de vitesse de rotation en ajustant la puissance de sortie,
- lorsque la puissance limite supérieure ($P_O$) ou le couple de rotation limite supérieur est atteinte ou atteint dans le premier segment d'hystérésis (211), on passe dans le deuxième segment d'hystérésis (212) et la vitesse de rotation limite supérieure ($n_O$) est spécifiée pour la vitesse de rotation de rotor en tant que valeur théorique de vitesse de rotation de sorte qu'alors la vitesse de rotation de rotor est régulée sur la vitesse de rotation limite supérieure ($n_O$) en tant que valeur théorique de vitesse de rotation en ajustant la puissance de sortie ou en ajustant le couple de rotation, dans lequel en particulier lorsque le deuxième segment d'hystérésis (212) est atteint en partant du premier segment d'hystérésis (211), la valeur théorique de vitesse de rotation est augmentée brutalement depuis la vitesse de rotation limite inférieure ($n_U$) sur la vitesse de rotation limite supérieure ($n_O$),
- dans le troisième segment d'hystérésis (213), la vitesse de rotation limite ($n_O$) est spécifiée en tant que valeur théorique de vitesse de rotation pour la vitesse de rotation de rotor, et la vitesse de rotation de rotor est régulée sur la vitesse de rotation limite supérieure ($n_O$) en tant que valeur théorique de vitesse de rotation en ajustant la puissance de sortie ou en ajustant le couple de rotation, et/ou

- lorsque la puissance limite inférieure ($P_U$) ou le couple de rotation limite inférieur sont atteints dans le troisième segment d'hystérésis (213), on passe dans le quatrième segment d'hystérésis (214) et la vitesse de rotation limite inférieure ($n_U$) est spécifiée pour la vitesse de rotation de rotor en tant que valeur théorique de vitesse de rotation et la vitesse de rotation de rotor est régulée sur la vitesse de rotation limite inférieure ($n_U$) en tant que valeur théorique de vitesse de rotation en ajustant la puissance de sortie ou en ajustant le couple de rotation, dans lequel en particulier lorsque le quatrième segment d'hystérésis (214) est atteint en partant du troisième segment d'hystérésis (213), la valeur théorique de vitesse de rotation est réduite brutalement depuis la vitesse de rotation limite supérieure ($n_O$) sur la vitesse de rotation limite inférieure ($n_U$).

13. Procédé selon l'une quelconque des revendications précédentes, **caractérisé en ce que**

- une ou la régulation de vitesse de rotation de la plage d'hystérésis (204) se termine quand

- - la vitesse de rotation de rotor baisse d'une valeur de seuil prédéfinie sous la vitesse de rotation limite inférieure ($n_U$), ou

- - la vitesse de rotation de rotor augmente d'une autre valeur de seuil ou de la même valeur de seuil prédéfinie au-dessus de la vitesse de rotation limite supérieure ($n_O$), ou

- - la puissance de sortie ne dépasse pas la puissance limite inférieure ($P_U$) ou

- dépasse la puissance limite supérieure ($P_O$) lorsque

- - un couple de rotation, en particulier le couple de rotation mécanique ($T_{mech}$) du rotor (106) du générateur ne dépasse pas le couple limite inférieur ou

- - dépasse le couple limite supérieur.

14. Procédé selon l'une quelconque des revendications précédentes, **caractérisé en ce que**

- la vitesse de rotation limite inférieure et la vitesse de rotation limite supérieure ($n_U$, $n_O$) sont choisies en fonction d'une fréquence souhaitée spécifiée d'un passage par la plage d'hystérésis (204), et/ou que

- la vitesse de rotation limite inférieure et la vitesse de rotation limite supérieure ($n_U$, $n_O$) sont inférieures ou supérieures à la vitesse de rotation problématique ($n_P$) d'une différence de vitesse de rotation spécifiée.

15. Eolienne (100, 302) avec un rotor (106) aérodynamique avec des pales de rotor (108) pouvant être ajustées dans leur angle de pale, comprenant un système de commande, **caractérisée en ce que** l'éolienne (100, 302) est préparée pour exécuter au moins un procédé selon l'une quelconque des revendications 1 à 14, en particulier qu'au moins un procédé selon l'une quelconque des revendications 1 à 14 est implémenté dans le système de commande, dans laquelle le système de commande est préparé pour mettre en œuvre les étapes

- de fonctionnement de l'éolienne (100, 302) dans une plage de régime partiel,

- - avec une vitesse de rotation de rotor inférieure à une vitesse de rotation nominale ($n_N$) et

- - avec une puissance de sortie inférieure à une puissance nominale,

- d'utilisation

- - d'une courbe caractéristique de vitesse de rotation-puissance, qui indique un lien entre une vitesse de rotation de rotor se réglant en fonction du vent prédominant et une puissance de sortie à régler de manière correspondante, ou

- - d'une courbe caractéristique de vitesse de rotation-couple de rotation, qui indique un lien entre une vitesse de rotation de rotor se réglant en fonction du vent prédominant et un couple de rotation à régler de manière correspondante,

- de réglage

- - d'une puissance de sortie selon la courbe caractéristique de vitesse de rotation-puissance, ou
- - d'un couple de rotation selon la courbe caractéristique de vitesse de rotation-couple de rotation, dans laquelle

- la courbe caractéristique de vitesse de rotation-puissance ou la courbe caractéristique de vitesse de rotation-couple de rotation présente dans la plage d'une vitesse de rotation problématique ($n_P$) à éviter une plage d'hystérésis (204).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10016912 C1
- US 20090292397 A1
- US 20140327243 A1
- US 4700081 A
- WO 2012139584 A1
- WO 2017036481 A1
- EP 3179097 A1